(19) Europäisches Patentamt
European Patent Office
Office européen des brevets

(11) **EP 4 232 238 B1**

(12) **EUROPÄISCHE PATENTSCHRIFT**

(45) Veröffentlichungstag und Bekanntmachung des Hinweises auf die Patenterteilung:
**28.01.2026 Patentblatt 2026/05**

(21) Anmeldenummer: **21782927.4**

(22) Anmeldetag: **22.09.2021**

(51) Internationale Patentklassifikation (IPC):
**B24B 55/10** (2006.01)    **B23Q 11/00** (2006.01)
**B25F 5/02** (2006.01)    **B24B 23/02** (2006.01)

(52) Gemeinsame Patentklassifikation (CPC):
**B24B 55/102; B24B 23/02; B25F 5/02;**
B23Q 11/0046; B23Q 11/0071

(86) Internationale Anmeldenummer:
**PCT/EP2021/076049**

(87) Internationale Veröffentlichungsnummer:
**WO 2022/083960 (28.04.2022 Gazette 2022/17)**

(54) **MATERIALAUFFANGVORRICHTUNG**

MATERIAL COLLECTION DEVICE

DISPOSITIF DE COLLECTE DE MATÉRIAU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.10.2020 DE 102020213230**
**20.10.2020 DE 102020213228**
**20.10.2020 DE 102020213229**
**20.10.2020 DE 102020213231**

(43) Veröffentlichungstag der Anmeldung:
**30.08.2023 Patentblatt 2023/35**

(60) Teilanmeldung:
**25216208.6**

(73) Patentinhaber: **Robert Bosch GmbH**
**70442 Stuttgart (DE)**

(72) Erfinder:
• **ESENWEIN, Florian**
**70771 Leinfelden-Echterdingen (DE)**
• **RIGGENMANN, Simon**
**70563 Stuttgart (DE)**
• **SADIKOVIC, Adamo**
**71272 Renningen (DE)**

(56) Entgegenhaltungen:
**EP-A1- 0 279 047        EP-A1- 1 661 661**
**EP-A1- 2 127 803        EP-A2- 0 842 736**
**US-A1- 2008 209 739**

**Beschreibung**

Stand der Technik

Es ist bereits eine Materialauffangvorrichtung für eine Handwerkzeugmaschine, mit einem Materialauffangbehälter zu einem Auffangen bei einem Betrieb der Handwerkzeugmaschine abgetragenen Materials, wobei zumindest eine Öffnung des Materialauffangbehälters zu einer Einspeisung des Materials in den Materialauffangbehälter in einer Öffnungsebene angeordnet ist, und mit zumindest einer Montageeinheit zu einer Montage des Materialauffangbehälters an der Handwerkzeugmaschine, vorgeschlagen worden.

Aus der EP 0 842 736 A2 ist eine Materialauffangvorrichtung gemäß dem Oberbegriff des Anspruchs 1 bekannt.

Offenbarung der Erfindung

Die Erfindung geht aus von einer Materialauffangvorrichtung für eine Handwerkzeugmaschine, mit einem Materialauffangbehälter zu einem Auffangen bei einem Betrieb der Handwerkzeugmaschine, insbesondere mittels der Handwerkzeugmaschine, abgetragenen Materials, wobei zumindest eine Öffnung des Materialauffangbehälters zu einer Einspeisung des Materials in den Materialauffangbehälter in einer Öffnungsebene angeordnet ist, und mit zumindest einer Montageeinheit zu einer Montage des Materialauffangbehälters an der Handwerkzeugmaschine.

Es wird vorgeschlagen, dass die Montageeinheit ein Kanalelement zur Verbindung mit einem Auswurfstutzen der Handwerkezugsmaschine umfasst, wobei eine Kanallängsachse des Kanalelements in zumindest einer senkrecht zur Öffnungsebene verlaufenden Schnittebene quer zur Öffnungsebene des Materialauffangbehälters angeordnet ist. Die Materialauffangvorrichtung ist insbesondere dazu vorgesehen, Material aufzufangen, welches durch die Handwerkzeugmaschine von einem Werkstück mechanisch abgetrennt und/oder abgetragen wird. Das Material kann insbesondere als Staub, Späne, Abrieb oder dergleichen ausgebildet sein. Die Handwerkzeugmaschine kann beispielsweise als Schleifmaschine, als Poliermaschine, als Hobelmaschine, als Bohrmaschine, als Fräsmaschine, als Sägemaschine oder dergleichen ausgebildet sein. Die Handwerkzeugmaschine ist vorzugsweise mit einer oder zwei Händen, insbesondere ohne Transport- und/oder Haltevorrichtung, haltbar und insbesondere während einer Werkstückbearbeitung von Hand führbar und bedienbar. Unter "vorgesehen" soll insbesondere speziell eingerichtet, speziell programmiert, speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Vorzugsweise ist der Materialauffangbehälter zylinderförmig, alternativ quaderförmig, kegelstumpfförmig, pyramidenstumpfförmig oder dergleichen, ausgebildet. Der Materialauffangbehälter umfasst vorzugsweise eine Behälterlängsachse, welche senkrecht zu der Öffnungsebene verläuft. Insbesondere weist der Materialauffangbehälter parallel zu, insbesondere entlang, der Behälterlängsachse die größte Längserstreckung auf. Die Behälterlängsachse ist insbesondere als Behältermittenachse ausgebildet. Vorzugsweise ist der Materialauffangbehälter zumindest im Wesentlichen rotationssymmetrisch um die Behälterlängsachse ausgebildet. Eine maximale Öffnungsweite der Öffnung erstreckt sich vorzugsweise über mehr als 50 %, bevorzugt mehr als 75 %, insbesondere mehr als 85 % einer maximalen Quererstreckung des Materialauffangbehälters in der Öffnungsebene. Vorzugsweise umfasst der Materialauffangbehälter einen Behälterbereich zu einem Sammeln des Materials. Bevorzugt umfasst der Materialauffangbehälter einen Befestigungsring zu einer Befestigung an der Montageeinheit. Insbesondere ist der Behälterbereich luftdurchlässig ausgebildet. Beispielsweise umfasst der Behälterbereich einen textilen Stoff, besonders bevorzugt einen Vliesstoff. Vorzugsweise ist der Behälterbereich zumindest zweilagig ausgebildet, insbesondere mit einer Filterschicht, insbesondere aus dem Vliesstoff, und eine Form des Behälterbereichs stabilisierenden, insbesondere textilen, Stützschicht, beispielsweise aus einem Nylongewirk, einem grobmaschigen Stoff, einem Drahtgeflecht oder dergleichen. Insbesondere ist die Filterschicht einem Behälterinnenraum des Materialauffangbehälters zugewandt. Vorzugsweise bildet die Stützschicht eine Außenseite des Behälterbereichs aus, insbesondere zu einem Erreichen einer vorteilhaft hohen Lebensdauer des Materialauffangbehälters. Optional umfasst der Materialauffangbehälter zusätzlich ein aus Kunststoff und/oder Metall gefertigtes Stützelement, welches an der Filterschicht und/oder der Stützschicht angeordnet ist, beispielsweise einen Rahmen und/oder ein Gehäuse, zu einer Stützung einer Form des Materialauffangbehälters. Alternativ ist die Filterschicht als Fächerfilter ausgebildet. Der Befestigungsring ist vorzugsweise in der Öffnungsebene angeordnet und kann rotationssymmetrisch angeordnete Befestigungselemente oder eine Rotationssymmetrie des Materialauffangbehälters brechende Befestigungselemente aufweisen. Vorzugsweise ist der Behälterbereich mittels einer Rastverbindung an dem Befestigungsring befestigt. Alternativ ist der Behälterbereich stoffschlüssig mit dem Befestigungsring verbunden oder an diesem mit separat ausgebildeten Fixierungen befestigt, wie insbesondere Schrauben, Nieten, Krampen oder dergleichen.

Der Materialauffangbehälter ist insbesondere in der Öffnungsebene an der Montageeinheit angeordnet. Das Kanalelement ist insbesondere rohrförmig ausgebildet. Besonderes bevorzugt ist eine Innenwand des Kanalelements rotationssymmetrisch zu der Kanallängsachse ausgebildet. Insbesondere gibt die Kanallängsachse eine Hauptdurchströmungsrichtung durch das Kanalelement von einer Einlassöffnung des Kanalelements zu einer Auslassöffnung des Kanalelements vor. Die Kanallängsachse ist vorzugsweise als Kanalmittenlängsachse ausgebildet. Die Auslassöffnung des Kanalelements ist insbesondere der Öffnung des Materialauffangbehälters zugewandt. Vorzugsweise ist das Kanalelement beabstandet von der Öffnungsebene angeordnet. Alternativ schneidet die Öffnungsebene das Kanalelement. Die Einlassöffnung des Kanalelements ist insbesondere dazu vorgesehen, der Handwerkzeugmaschine zugewandt angeordnet zu werden. Das Kanalelement ist insbesondere dazu vorgesehen, den Auswurfstutzen der Handwerkzeugmaschine aufzunehmen. Alternativ ist das Kanalelement dazu vorgesehen, von dem Auswurfstutzen aufgenommen zu werden. Insbesondere weist die Kanallängsachse einen von 90° verschiedenen Winkel zur Öffnungsebene auf. Insbesondere schließen die Kanallängsachse und die Öffnungsebene einen spitzen Winkel ein. Vorzugsweise liegt der Winkel zwischen der Öffnungsebene und der Kanallängsachse in der Schnittebene zwischen 30° und 60°, bevorzugt zwischen 40° und 50°, besonders bevorzugt zwischen 44° und 46°. Vorzugsweise umfasst die Schnittebene die Behälterlängsachse.

Durch die erfindungsgemäße Ausgestaltung unterscheidet sich die Behälterlängsachse von der Kanallängsachse. Insbesondere unterscheidet sich die Behälterlängsachse von einer durch den Auswurfstutzen festgelegten Drehachse, bei einer Drehung der Materialauffangvorrichtung um den Auswurfstutzen. Insbesondere kann eine Position des Materialauffangbehälters relativ zu der Handwerkzeugmaschine in einem an dem Auswurfstutzen angeschlossenen Zustand der Materialauffangvorrichtung verändert werden. Insbesondere kann eine Position des Materialauffangbehälters relativ zu der Handwerkzeugmaschine und/oder einem Werkstück vorteilhaft flexibel angepasst werden. Insbesondere ist der Materialauffangbehälter relativ zu der Handwerkzeugmaschine drehbar und/oder schwenkbar an der Handwerkzeugmaschine anordenbar.

Weiter wird vorgeschlagen, dass die Kanallängsachse in einer zu der Schnittebene und der Öffnungsebene senkrechten weiteren Schnittebenen quer zur Öffnungsebene angeordnet ist. Außerdem sind die Kanallängsachse und die Behälterlängsachse windschief zueinander angeordnet. Vorzugsweise beträgt ein Winkel zwischen der Kanallängsachse und der Öffnungsebene in der weiteren Schnittebene zwischen 10° und 40°, bevorzugt zwischen 15° und 30°. Vorzugsweise umfasst die weitere Schnittebene die Behälterlängsachse. Insbesondere ist die Behälterlängsachse eine Schnittgerade der Schnittebene und der weiteren Schnittebene. Durch die erfindungsgemäße Ausgestaltung kann der Auffangbehälter vorteilhaft geneigt gegen ein Werkstück angeordnet werden und/oder eine Neigung des Auswurfstutzens relativ zu dem Werkstück vorteilhaft ausgeglichen werden.

Ferner wird vorgeschlagen, dass die Montageeinheit ein Adaptergehäuse umfasst, welches von der Öffnungsebene in Richtung der Kanallängsachse asymmetrisch verjüngend ausgebildet ist und in welches das Kanalelement zumindest teilweise hineinragt. Vorzugsweise ist das Kanalelement zumindest im Wesentlichen vollständig, insbesondere zumindest 50 %, bevorzugt mehr als 75 % bezogen auf eine maximale Erstreckung des Kanalelements parallel zu, insbesondere entlang, der Kanallängsachse, im Inneren des Adaptergehäuses angeordnet. Vorzugsweise verbindet das Adaptergehäuse das Kanalelement mit dem Befestigungsring des Materialauffangbehälters. Besonders bevorzugt ist das Adaptergehäuse einteilig mit dem Kanalelement ausgebildet. Vorzugsweise ist das Adaptergehäuse in der Öffnungsebene bündig mit dem Auffangbehälter angeordnet. Vorzugsweise verengt das Adaptergehäuse einen maximalen Querschnitt des Materialauffangbehälters parallel zur Öffnungseben auf einen maximalen Querschnitt des Kanalelements senkrecht zur Kanallängsachse. Vorzugsweise umfasst das Adaptergehäuse und der Befestigungsring zueinander komplementäre Montageelemente, beispielsweise ein Innengewinde und ein Außengewinde, eine Rastzunge und eine Rastaufnahme oder dergleichen. Insbesondere sind die Montageelemente des Befestigungsrings und des Adaptergehäuses zu einer von Hand zerstörungsfrei lösbaren und wiederherstellbaren Verbindung des Materialauffangbehälters und des Adaptergehäuses vorgesehen. Besonders bevorzugt ist der die Verjüngung ausbildende Teil des Adaptergehäuses in Form eines schief auf den Befestigungsring aufsitzenden Kegelstumpfs ausgebildet. Durch die erfindungsgemäße Ausgestaltung kann eine maximale Kanalquererstreckung des Kanalelements insbesondere unabhängig von einer maximalen Öffnungsweise der Öffnung ausgelegt werden. Insbesondere kann der gleiche Auffangbehälter durch Austausch der Montageeinheit, für verschiedene Handwerkzeugmaschinen, mit insbesondere verschieden Auswurfstutzen, eingesetzt werden.

Weiterhin wird vorgeschlagen, dass eine, insbesondere die bereits genannte, Einlassöffnung des Kanalelements sich in einer Ebene erstreckt, welche zumindest im Wesentlichen senkrecht zur Kanallängsachse und insbesondere quer zur Öffnungsebene verläuft. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Vorzugsweise ist die Auslassöffnung zumindest im Wesentlichen parallel zu der Einlassöffnung angeordnet.

Insbesondere bildet das Kanalelement an der Auslassöffnung ein Anschlagselement zu einem zur Kanallängsachse parallelen Formschluss mit dem Auswurfstutzten aus. Optional bildet das Kanalelement an der Einlassöffnung ein weiteres Anschlagelement zu einem zur Kanallängsachse parallelen Formschluss mit dem Auswurfstutzen aus. Insbesondere umgreift die Einlassöffnung den Auswurfstutzen in einem an dem Auswurfstutzen angeordneten Zustand der Materialauffangvorrichtung. Durch die erfindungsgemäße Ausgestaltung kann ein Risiko, dass eine spezielle Ausgestaltung des Auswurfstutzens einen Rotationsbereich oder ein Schwenkbereich der Materialauffangvorrichtung um die Kanallängsachse einschränkt, vorteilhaft gering gehalten werden. Insbesondere kann ein durch eine Drehung verursachtes Anstoßen der Materialauffangvorrichtung an einem Element des Auswurfstutzens und/oder einer den Auswurfstutzen ausbildenden Gehäuses der Handwerkzeugmaschine vorteilhaft gering gehalten werden.

Des Weiteren wird vorgeschlagen, das eine, insbesondere die bereits genannte, Einlassöffnung des Kanalelements beabstandet von einer zu der Öffnungsebene senkrecht verlaufenden, insbesondere der bereits genannten, Behälterlängsachse des Materialauffangbehälters angeordnet ist. Insbesondere weist die Behälterlängsachse einen Schnittpunkt mit dem Adaptergehäuse auf. Bevorzugt weist die Behälterlängsachse einen Schnittpunkt mit dem Kanalelement auf. Besonders bevorzugt unterteilen zwei zueinander senkrechte Ebenen, welche als Schnittgerade die Behälterlängsachse aufweisen, insbesondere die Schnittebene und die weitere Schnittebene, die Materialauffangvorrichtung in vier Quadranten, welche insbesondere jeder ein Viertel des Auffangbehälters umfasst. Vorzugsweise ist die Einlassöffnung vollständig in einem der Quadranten angeordnet. Vorzugsweise ist die Auslassöffnung über mehrere der vier, insbesondere über alle vier, Quadranten, insbesondere ungleichmäßig, verteilt. Insbesondere verläuft die Behälterlängsachse durch die Auslassöffnung hindurch. Vorzugsweise steht die Auslassöffnung höchstens geringfügig über eine Außenkontur des Auffangbehälters in einer zur Öffnungsebene parallelen Ebene hinaus. Insbesondere schneiden Tangentialebenen, die an Quadraten anliegen, welche nicht die Einlassöffnung umfassen, weder die Einlassöffnung noch das Kanalelement. Durch die erfindungsgemäße Ausgestaltung kann ein vorteilhaft langer Aufnahmeraum des Kanalelements zur Aufnahme des Auswurfstutzens erreicht werden. Insbesondere kann die Materialvorrichtung vorteilhaft sicher an dem Auswurfstutzen angeordnet werden. Insbesondere kann ein Verkippen der Kanallängsachse des Kanalelements relativ zu einer Kanallängsachse des Auswurfstutzens vorteilhaft gering gehalten werden.

Ferner wird vorgeschlagen, dass eine maximale Adapterlängserstreckung eines über den Materialauffangbehälter hinausstehenden Abschnitts der Montageeinheit kleiner oder gleich einer maximale Adapterquererstreckung der Montageeinheit in der Öffnungsebene ist. Insbesondere liegt ein Verhältnis der Adapterlängserstreckung zu der Adapterquererstreckung zwischen 50 % und 80 %, bevorzugt zwischen 60 % und 70 %. Die maximale Adapterlängserstreckung steht insbesondere senkrecht auf der Öffnungsebene und ist insbesondere parallel zu der Behälterlängsachse. Insbesondere ist die maximale Adapterlängserstreckung beabstandet von der Behälterlängsachse. Vorzugsweise liegt die maximale Adapterquererstreckung in der Öffnungsebene. Vorzugsweise ist die maximale Adapterquerstreckung zumindest im Wesentlichen gleich der maximalen Quererstreckung des Auffangbehälters in einer zur Öffnungsebene parallelen Ebene. Insbesondere ist die maximale Adapterquererstreckung zwischen 90 % und 110 %, bevorzugt zwischen 95 % und 105 % der maximalen Quererstreckung des Auffangbehälters. Durch die erfindungsgemäße Ausgestaltung kann die Montageeinheit vorteilhaft kompakt gehalten werden. Insbesondere kann eine maximale Längserstreckung der Materialauffangvorrichtung parallel zur Behälterlängsachse vorteilhaft gering gehalten werden oder der Behälterbereich vorteilhaft groß ausgestaltet werden. Insbesondere kann ein Herausragen der Mündungsöffnung über den Auffangbehälter hinaus vorteilhaft klein gehalten werden. Insbesondere kann eine Rotationsbahn des Materialauffangbehälters um die Kanallängsachse vorteilhaft klein gehalten werden, insbesondere sodass ein vorteilhaft großer Schwenkwinkel erreicht werden kann, unter welchem der Materialauffangbehälter ohne Kollision mit der Handwerkzeugmaschine und/oder dem Werkstück um die Kanallängsachse verdreht werden kann.

Weiter wird vorgeschlagen, dass eine, insbesondere die bereits genannte Auslassöffnung des Kanalelements eine maximale Auslassöffnungsweite zwischen 35 % und 55 %, bevorzugt zwischen 40 % und 50 %, der maximalen Öffnungsweite der Öffnung in der Öffnungsebene einnimmt. Vorzugsweise beträgt ein Verhältnis der maximalen Kanalquererstreckung, insbesondere ein Innendurchmesser, des Kanalelements senkrecht zur Kanallängsachse im Verhältnis zu der Öffnungsweite der Öffnung zwischen 30 % und 60 %, vorzugsweise zwischen 45 % und 55 %. Besonders bevorzugt ist die Auslassöffnungsweite kleiner als die maximale Kanalquererstreckung, insbesondere zur Bildung eines Anschlags für den Auswurfstutzen. Vorzugsweise ist die Auslassöffnung des Kanalelements in einer Ebene angeordnet, die zumindest im Wesentlichen senkrecht zu der Kanallängsachse und quer zur Öffnungsebene verläuft. Ein geometrischer Mittelpunkt der Auslassöffnung des Kanalelements ist zumindest in der weiteren Schnittebene insbesondere gegenüber der Behälterlängsachse versetzt angeordnet, insbesondere um einen Betrag von 10 % bis 30 % der maximalen Öffnungsweite. Der geometrische Mittelpunkt der Auslassöffnung ist vorzugweise in einem anderen Quadranten als die Einlassöffnung angeordnet. Insbesondere ist der geometrische Mittelpunkt der Auslassöffnung auf derselben Seite der Schnittebene angeordnet, wie die Einlassöffnung. Insbesondere sind der geometrische Mittelpunkt der Auslassöffnung und die Einlassöffnung auf verschiedenen Seiten der weiteren Schnittebene angeordnet. Durch die erfindungsgemäße Ausgestaltung kann gleichzeitig eine Umlenkungswinkel eines durch das Kanalelement in die Behältervorrichtung eingespeisten Luftstroms vorteilhaft klein gehalten werden und der Auswurfstutzen vorteilhaft tief in der Materialauffangvorrichtung angeordnet werden.

Darüber hinaus wird eine Handwerkzeugmaschine mit einer erfindungsgemäßen Materialauffangvorrichtung vorgeschlagen. Die Handwerkzeugmaschine umfasst insbesondere eine Werkzeugvorrichtung zu einer Aufnahme oder Ausbildung eines Bearbeitungswerkzeugs, insbesondere eines Schleifmittels, eines Bohrkopfs, eines Sägeblatts oder dergleichen. Die Handwerkzeugmaschine umfasst insbesondere eine Antriebsvorrichtung zu einem Antrieb der Werkzeugvorrichtung. Insbesondere umfasst die Antriebsvorrichtung eine Antriebswelle, welche eine Drehachse definiert. Die Handwerkzeugmaschine umfasst insbesondere ein Antriebsgehäuse, in welchem die Antriebsvorrichtung angeordnet ist. Vorzugsweise umfasst die Handwerkzeugmaschine eine Verbindungsgehäuseeinheit, in welcher die Werkzeugvorrichtung und optional ein Werkstück zumindest teilweise angeordnet sind. Das Antriebsgehäuse und die Verbindungsgehäuseeinheit können einteilig oder separat voneinander ausgebildet sein. Die Verbindungsgehäuseeinheit ist vorzugsweise fest mit dem Antriebgehäuse verbunden. Vorzugsweise umfasst die Verbindungsgehäuseeinheit den Auswurfstutzen. Vorzugsweise sind der Auswurfstutzen und das Kanalelement koaxial aneinander angeordnet. Vorzugsweise umfasst die Werkzeugvorrichtung einen Lüfter zu einer Förderung des Materials durch den Auswurfstutzen in den Materialauffangbehälter. Vorzugsweise umfasst das Antriebsgehäuse eine Längsachse, in deren Richtung das Antriebsgehäuse die größte Erstreckung aufweist. Insbesondere ist die Behälterlängsachse in zumindest einer Drehposition des Auffangbehälters zumindest im Wesentlichen parallel zu der Längsachse des Antriebsgehäuses oder der Drehachse der Antriebsvorrichtung ausrichtbar. Vorzugsweise ist die Behälterlängsachse in zumindest einer Drehposition des Auffangbehälters in einem Winkel von mehr als 20°, insbesondere mehr als 30°, besonders bevorzugt mehr als 40° zu der Längsachse oder der Drehachse ausrichtbar. Durch die erfindungsgemäße Ausgestaltung kann eine Handwerkzeugmaschine mit einer vorteilhaft flexibel anordenbaren Materialauffangvorrichtung bereitgestellt werden. Insbesondere kann die Handwerkzeugmaschine auch auf engem Raum und/oder unebenen Werkstücken vorteilhaft eingesetzt werden.

Weiter wird vorgeschlagen, dass eine zur Öffnungsebene senkrechte, insbesondere die bereits genannte, Behälterlängsachse des Materialauffangbehälters relativ zu einer durch eine senkrecht zu einer, insbesondere der bereits genannten, Drehachse einer, insbesondere der bereits genannten, Antriebswelle der Handwerkzeugmaschine verlaufenden Längsachse und die Drehachse aufgespannten Montageebene einen Winkel einschließt, der addiert mit einem Winkel zwischen Kanallängsachse und Behälterlängsachse einen Summenwinkel zwischen 80° und 100°, insbesondere zwischen 85° und 95°, besonders bevorzugt zwischen 89° und 91°, bildet. Insbesondere läuft die Behälterlängsachse bei einer Drehung des Materialauffangbehälters um die Kanallängsachse entlang eines Kegelmantels mit einem Öffnungswinkel kleiner 60°, insbesondere kleiner 50°, besonders bevorzugt kleiner 46° und insbesondere größer 10°, bevorzugt größer 20°, besonders bevorzugt größer 44°. Durch die erfindungsgemäße Ausgestaltung kann die Behälterlängsachse parallel zu der Längsachse des Antriebsgehäuses ausgerichtet werden.

Ferner wird vorgeschlagen, dass eine zur Öffnungsebene senkrechte Behälterlängsachse im an der Handwerkzeugmaschine montierten Zustand der Materialauffangvorrichtung, zumindest im Wesentlichen parallel zu einer durch eine senkrecht zu einer Drehachse einer Antriebswelle der Handwerkzeugmaschine verlaufenden Längsachse eines Antriebsgehäuses der Handwerkzeugmaschine und die Drehachse aufgespannten Montageebene anordenbar ist, insbesondere wobei die Behälterlängsachse parallel zur Längsachse ausgerichtet ist. Besonders bevorzugt ist die Behälterlängsachse in einer parallel zur Längsachse ausgerichteten Drehposition zumindest im Wesentlichen parallel zu einer Arbeitsebene der Handwerkzeugmaschine. Die Arbeitsebene ist insbesondere senkrecht zu einer Abtriebsdrehachse der Werkzeugvorrichtung. Besonders bevorzugt ist die Abtriebsdrehachse parallel zu oder identisch mit der Drehachse der Antriebsvorrichtung. In einer alternativen Ausgestaltung ist die Drehachse der Antriebsvorrichtung parallel zu der Längsachse des Antriebsgehäuses und senkrecht zu der Abtriebsdrehachse angeordnet, wobei die Montageebene insbesondere durch die Längsachse und die Abtriebsdrehachse aufgespannt wird. Durch die erfindungsgemäße Ausgestaltung kann die Materialauffangvorrichtung in zumindest einer Drehposition an der Handwerkzeugmaschine ausgerichtet werden, welche vorteilhaft wenig Platz einnimmt und insbesondere ein vorteilhaft geringes Risiko eines Anstoßens und/oder Hängenbleibens an einem Objekt im Arbeitsbereich der Handwerkzeugmaschine aufweist. Darüber hinaus kann ein Risiko eines Verkippens der Handwerkzeugmaschine relativ zu einem Werkstück vorteilhaft gering gehalten werden. Insbesondere kann eine vorteilhaft stabile Handwerkzeugmaschine zur Verfügung gestellt werden.

Darüber hinaus wird vorgeschlagen, dass die Handwerkzeugmaschine ein Antriebsgehäuse umfasst, welches einen Abstand von dem Materialauffangbehälter aufweist, der zwischen 10 mm und 40 mm , bevorzugt zwischen 15 mm und 35 mm, besonders bevorzugt zwischen 20 mm und 30 mm, liegt. Insbesondere weist das Antriebsgehäuse eine Grifffläche auf. Insbesondere weist die Grifffläche den oben genannten Abstand zu dem Materialauffangbehälter auf. Der oben genannte Abstand gilt insbesondere, wenn die Materialauffangvorrichtung an dem Auswurfstutzen angeordnet und die Behälterlängsachse des Materialauffangbehälters zumindest im Wesentlichen parallel zu der Längsachse des Antriebsgehäuses ausgerichtet ist. Vorzugsweise weist zumindest die Grifffläche zumindest in der Mehrzahl aller möglichen Drehpositionen des Materialauffangbehälters einen größeren Abstand zu der Grifffläche auf, als wenn die Behälterlängsachse parallel zu der Längsachse des Antriebsgehäuses ausgerichtet ist. Der oben genannte Abstand bezieht sich insbesondere auf einen zur Montageebene senkrechten Abstand. Durch die erfindungsgemäße Ausgestaltung kann vorteilhaft ein oder mehrere Finger zwischen dem Antriebsgehäuse und dem Materialauffangbehälter platziert werden. Insbesondere ist der Materialauffangbehälter vorteilhaft weit von dem Antriebsgehäuse, insbesondere der Grifffläche entfernt. Insbesondere wird eine Handhalteposition der Handwerkzeugmaschine vorteilhaft wenig durch den Materialauffangbehälter eingeschränkt.

Die erfindungsgemäße Materialauffangvorrichtung und/oder die erfindungsgemäße Handwerkzeugmaschine sollen/soll hierbei nicht auf die oben beschriebene Anwendung und Ausführungsform beschränkt sein. Insbesondere kann die erfindungsgemäße Materialauffangvorrichtung und/oder die erfindungsgemäße Handwerkzeugmaschine zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

Zeichnungen

Weitere Vorteile ergeben sich aus der folgenden Zeichnungsbeschreibung. In den Zeichnungen sind vier Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

Fig. 1 Eine schematische Perspektivdarstellung einer erfindungsgemäßen Materialauffangvorrichtung,

Fig. 2 eine schematische Perspektivdarstellung einer erfindungsgemäßen Handwerkzeugmaschine mit der erfindungsgemäßen Materialauffangvorrichtung,

Fig. 3 eine schematische Draufsicht auf die erfindungsgemäße Handwerkzeugmaschine,

Fig. 4 einen schematischen Längsschnitt der erfindungsgemäßen Handwerkzeugmaschine,

Fig. 5 einen schematischen Querschnitt der erfindungsgemäßen Handwerkzeugmaschine,

Fig. 6 eine schematische Darstellung einer Befestigung einer Verbindungsgehäuseeinheit der erfindungsgemäßen Handwerkzeugmaschine,

Fig. 7 einen schematischen Querschnitt der Verbindungsgehäuseeinheit,

Fig. 8 einen schematischen Längsschnitt einer Materialauffangvorrichtung der erfindungsgemäßen Handwerkzeugmaschine,

Fig. 9 ein schematisches Ablaufdiagramm eines erfindungsgemäßen Verfahrens zu einer Montage der erfindungsgemäßen Handwerkzeugmaschine,

Fig. 10 eine schematische Darstellung einer alternativen Ausgestaltung einer erfindungsgemäßen Handwerkzeugmaschine mit einer alternativen Antriebsvorrichtung,

Fig. 11 einen schematischen Längsschnitt der alternativen Ausgestaltung,

Fig. 12 eine schematische Darstellung einer weiteren alternativen Ausgestaltung einer erfindungsgemäßen Handwerkzeugmaschine mit einer alternativen Schleifvorrichtung,

Fig. 13 einen schematischen Längsschnitt der weiteren alternativen Ausgestaltung,

Fig. 14 eine schematische Darstellung einer zusätzlichen alternativen Ausgestaltung einer erfindungsgemäßen Handwerkzeugmaschine mit einer weiteren alternativen Schleifvorrichtung und

Fig. 15 einen schematischen Längsschnitt der zusätzlichen alternativen Ausgestaltung.

Beschreibung der Ausführungsbeispiele

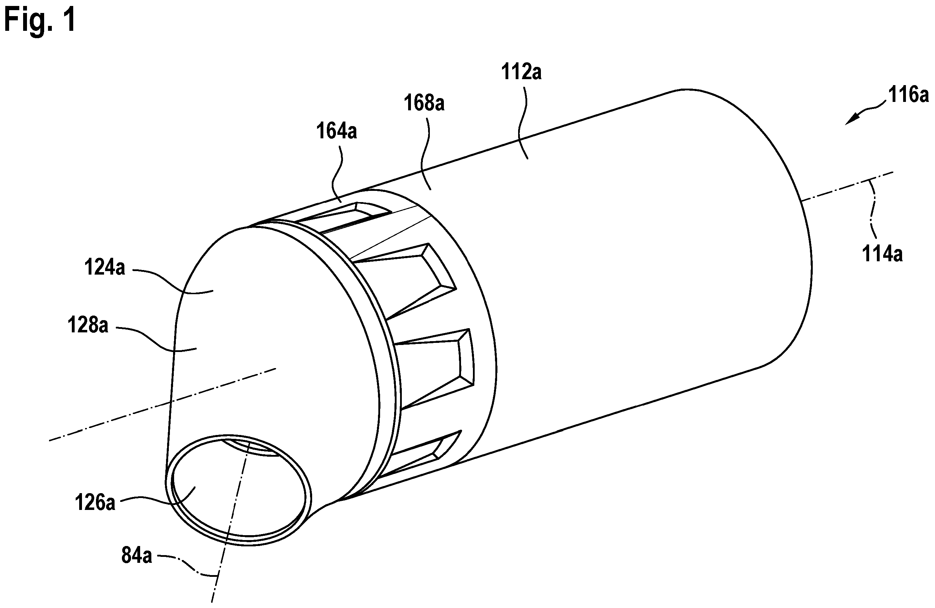

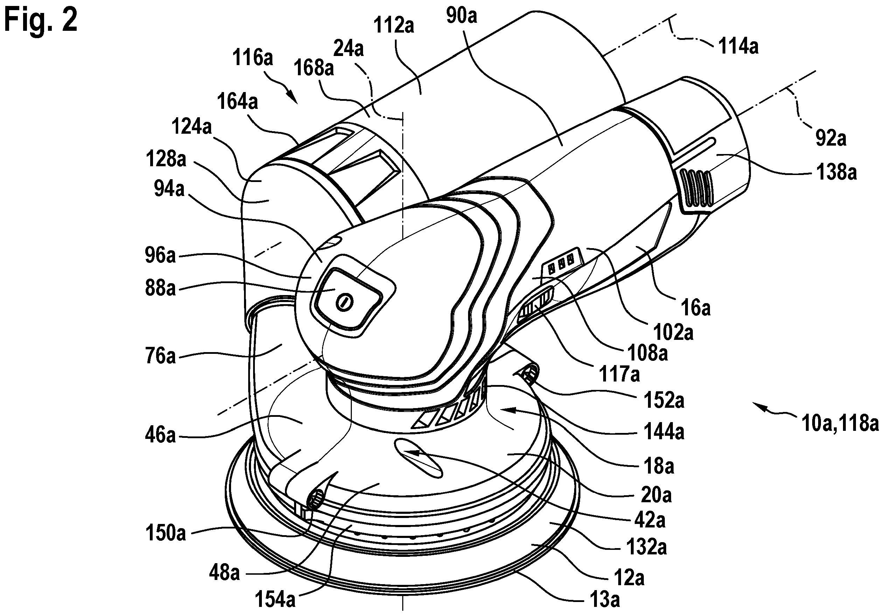

Figur 1 zeigt eine Materialauffangvorrichtung 116a für eine Handwerkzeugmaschine 118a (siehe Figur 2). Die Materialauffangvorrichtung 116a weist insbesondere einen Materialauffangbehälter 112a auf. Der Materialauffangbehälter 112a ist vorzugweise zylinderförmig ausgebildet. Die Materialauffangvorrichtung 116a umfasst insbesondere eine Montageeinheit 124a. Die Montageeinheit umfasst insbesondere ein Adaptergehäuse 128a und ein Kanalelement 126a, welches in dem Adaptergehäuse 128a angeordnet ist.

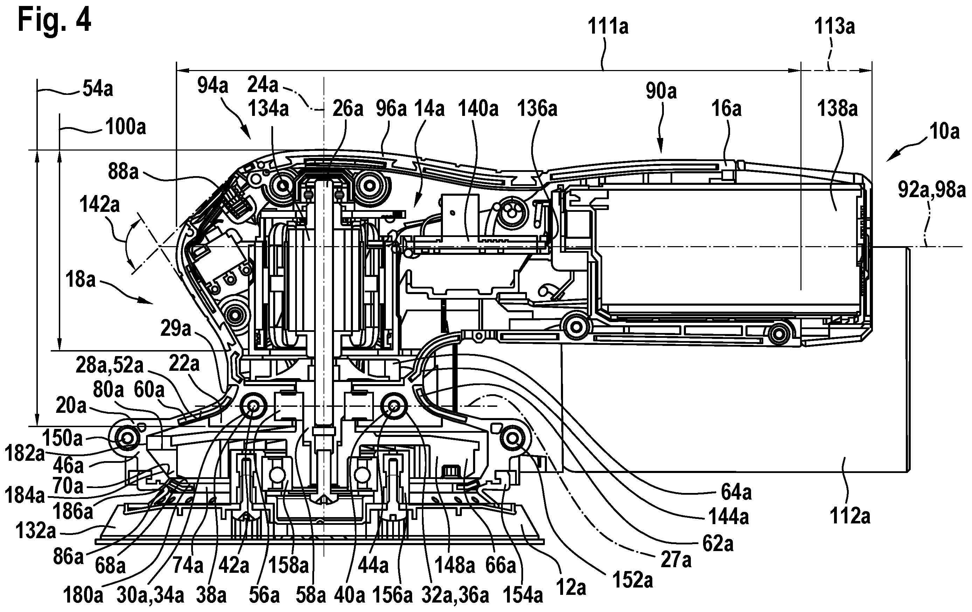

Figur 2 zeigt beispielhaft eine als Handschleifmaschine 10a ausgebildete Handwerkzeugmaschine 118a. Die Handwerkzeugmaschine 118a ist insbesondere als Exzenterschleifer ausgebildet. Die Handwerkzeugmaschine 118a umfasst, insbesondere als Werkzeugvorrichtung, eine Schleifvorrichtung 12a zu einer Aufnahme oder Ausbildung eines Schleifmittels 13a. Die Schleifvorrichtung 12a umfasst insbesondere ein Schleifpad 132a, welches hier beispielhaft mit einem Durchmesser von 125 mm dargestellt ist. Alternativ weist das Schleifpad 132a einen Durchmesser von 150 mm oder einen anderen an eine Größe des Schleifmittels 13a angepassten Durchmesser auf. Die Handwerkzeugmaschine 118a umfasst eine Antriebsvorrichtung 14a, insbesondere zu einem Antrieb der Schleifvorrichtung 12a (siehe Figur 4), welche insbesondere eine Drehachse 24a definiert, um welche das Schleifpad 132a, insbesondere exzentrisch, antreibbar ist. Die Handwerkzeugmaschine 118a umfasst ein die Antriebsvorrichtung 14a aufnehmendes Antriebsgehäuse 16a.

Das Antriebsgehäuse 16a weist eine Längsachse 92a auf, welche zumindest im Wesentlichen senkrecht zu der Drehachse 24a verläuft. Bevorzugt weist das Antriebsgehäuse 16a zwei Antriebsgehäusehalbschalen auf, welche in einer durch die Längsachse 92a und die Drehachse 24a aufgespannten Montageebene 50a aneinander angeordnet sind (vgl. Figur 2). Das Antriebsgehäuse 16a umfasst einen Längsachsenabschnitt 90a, der um die Längsachse 92a angeordnet ist. Der Längsachsenabschnitt 90a ist insbesondere zu einer Aufnahme eines Akkupacks 138a, insbesondere eines 12 Volt-Akkupacks, vorgesehen. Das Antriebsgehäuse 16a weist einen Frontabschnitt 94a auf. Der Frontabschnitt 94a umgibt einen Schnittpunktbereich der Drehachse 24a und der Längsachse 92a. Der Frontabschnitt 94a umfasst eine kuppelförmige Griffläche 96a. Optional ist die Griffläche 96a als Weichkomponente ausgebildet, welche an einem Gehäusegrundkörper des Antriebsgehäuses 16a angeordnet, insbesondere eingelassen, ist. Alternativ bildet eine Außenfläche des Gehäusegrundkörpers des Antriebsgehäuses 16a die Griffläche 96a aus. Die Handwerkzeugmaschine 118a umfasst zumindest ein Betätigungselement 88a zu einem Steuern der Antriebsvorrichtung 14a, insbesondere zu einem An-und Ausschalten der Antriebsvorrichtung 14a. Vorzugsweise ist das Betätigungselement 88a in einem aktivierten Zustand der Antriebsvorrichtung 14a einrastbar ausgebildet. Das Betätigungselement 88a ist in der Griffläche 96a angeordnet. Das Betätigungselement 88a ist auf einer von dem Längsachsenabschnitt 90a abgewandten Seite einer zur Längsachse 92a senkrechten und die Drehachse 24a umfassenden Ebene angeordnet.

Die Handwerkzeugmaschine 118a umfasst eine Schnittstellenvorrichtung 18a zu einem Wirkverbinden, insbesondere einer Kupplung, der Schleifvorrichtung 12a mit der Antriebsvorrichtung 14a. Die Schnittstellenvorrichtung 18a ist insbesondere entlang der Drehachse 24a an dem Frontabschnitt 94a angeordnet. Die Schnittstellenvorrichtung 18a umfasst zumindest eine Verbindungsgehäuseeinheit 20a zu einer zumindest teilweisen Aufnahme der Schleifvorrichtung 12a. Die Verbindungsgehäuseeinheit 20a ist von dem Antriebsgehäuse 16a und der Schleifvorrichtung 12a separat ausgebildet. Die Verbindungsgehäuseeinheit 20a weist zumindest zwei Hauptschalen 46a, 48a auf. Die Hauptschalen 46a, 48a sind insbesondere in der Montageebene 50a aneinander angeordnet. Die Hauptschalen 46a, 48a sind vorzugsweise aus Kunststoff gefertigt. Bevorzugt weisen die Hauptschalen 46a, 48a eine Wandstärke zwischen 1 mm und 3,5 mm, bevorzugt zwischen 1,5 mm und 2,5 mm, besonders bevorzugt zwischen 1,9 mm und 2,3 mm, auf. Die Verbindungsgehäuseeinheit 20a umfasst einen Auswurfstutzen 76a. Der Auswurfstutzten 76a ist insbesondere zu einem Auswerfen von bei einem Schleifprozess abgeriebenem Material aus der Verbindungsgehäuseeinheit 20a vorgesehen. Der Auswurfstutzen 76a ist vorzugsweise an einer der Hauptschalen 46a angeordnet. Die Handwerkzeugmaschine 118a umfasst eine Materialauffangvorrichtung 116a. Die Materialauffangvorrichtung 116a umfasst den, insbesondere luftdurchlässigen, Materialauffangbehälter 112a zu einem Auffangen durch die Handwerkzeugmaschine 118a abgetragenen, und insbesondere über den Auswurfstutzten 76a ausgeworfenen, Materials, wie insbesondere Staub, Späne und/oder Abrieb. In zumindest einer Konfiguration des Materialauffangbehälters 112a verläuft eine Behälterlängsachse 114a des Materialauffangbehälters 112a zumindest im Wesentlichen parallel zu der Längsachse 92a des Antriebsgehäuses 16a. Die Behälterlängsachse 114a ist insbesondere als Behältermittenachse ausgebildet, welche insbesondere durch einen geometrischen Schwerpunkt des Materialauffangbehälters 122a verläuft.

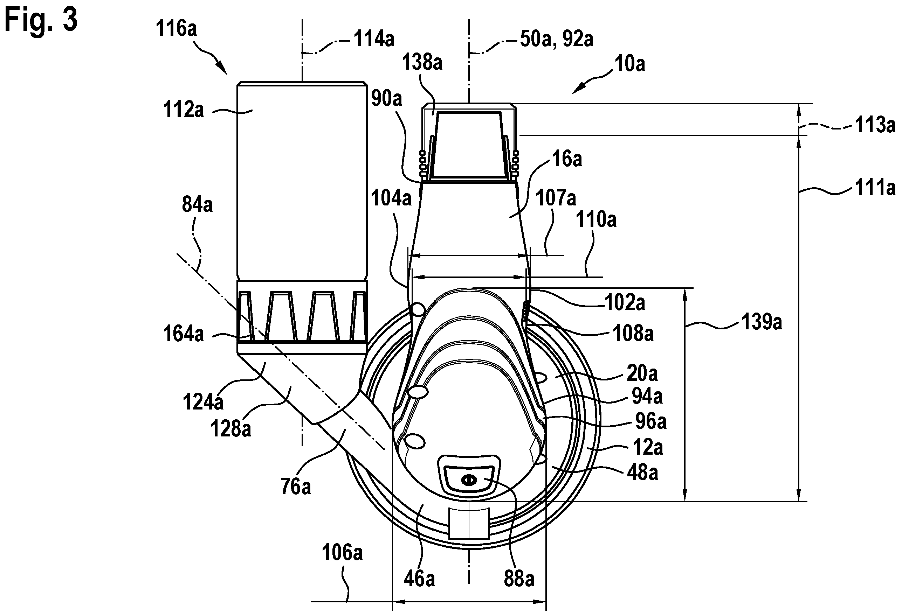

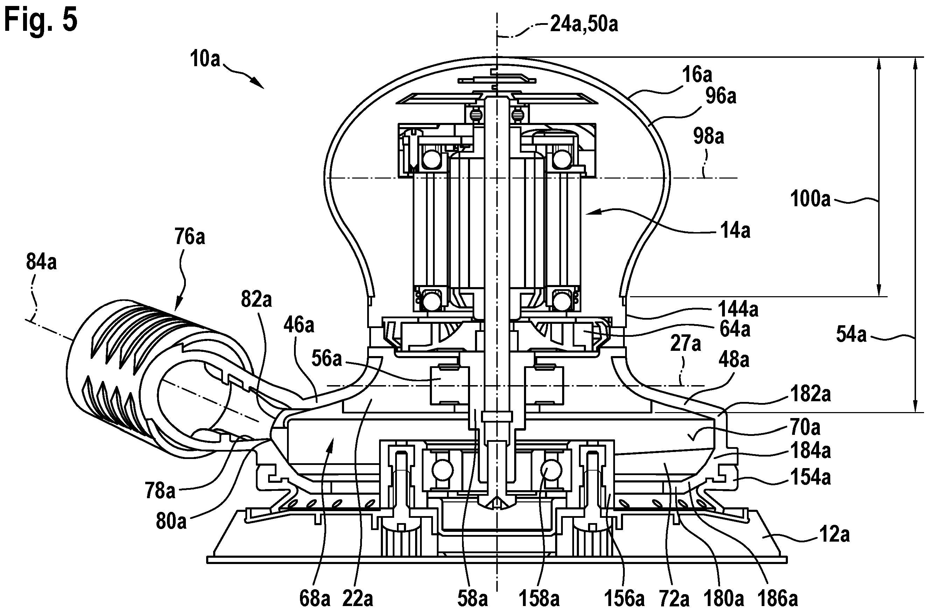

Figur 3 zeigt eine Sicht auf die Handwerkzeugmaschine 118a entlang der Drehachse 24a. Das Antriebsgehäuse 16a weist in einer zur Drehachse 24a senkrechten die Längsachse 92a umfassenden Ebene beidseitig eine Ausstülpung 102a, 104a auf. Ein Verhältnis einer maximalen Ausstülpungsquererstreckung 107a von Ausstülpung 102a zu Ausstülpung 104a des Antriebsgehäuses 16a relativ zu einer größten Grifflächenquererstreckung 106a des Frontabschnitts 94a liegt zwischen 0,75 und 0,9, insbesondere zwischen 0,80 und 0,85. Vorzugsweise ist die größte Grifflächenquererstreckung 106a zugleich die größte Quererstreckung des Antriebsgehäuses 16 senkrecht zur Drehachse 24a und senkrecht zur Längsachse 92a. Die größte Grifflächenquererstreckung 106a beträgt im Verhältnis zu einer Gesamthöhe 54a (vgl. Figuren 4 und 5) des Antriebsgehäuses 16a bevorzugt zwischen 0,8 und 0,95, insbesondere zwischen 0,85 und 0,9. Bevorzugt beträgt die größte Grifflächenquererstreckung 106a zwischen 65 mm und 85 mm, insbesondere zwischen 70 mm und 80 mm. Insbesondere ist die Gesamthöhe 54a des Antriebsgehäuses 16a parallel zur Drehachse 24a kleiner als 95 mm, bevorzugt kleiner als 90 mm, insbesondere kleiner als 85 mm. Besonders bevorzugt ist eine maximale Maschinenhöhe parallel zur Drehachse 24a der Handwerkzeugmaschine 118a kleiner als 115mm, insbesondere kleiner als 110 mm.

Die Griffläche 96a des Antriebsgehäuses 16a geht ausgehend von dem Frontabschnitt 94a in Richtung der Längsachse 92a fließend in einen durch die Ausstülpungen 102a, 104a begrenzten Verjüngungsbereich 108a des Längsachsenabschnitts 90a über. Ein Verhältnis einer maximalen Verjüngungsquererstreckung 110a des Verjüngungsbereichs 108a zu der größten Griffflächenquererstreckung 106a des Frontabschnitts 94a liegt zwischen 0,7 und 0,85, insbesondere zwischen 0,75 und 0,8. Die Grifffläche 96a des Antriebsgehäuses 16a erstreckt sich von dem Frontabschnitt 94a bis zu einer zu der Längsachse 92a senkrechten Ebene, welche die Ausstülpungen 102a, 104a schneidet. Optional erstreckt sich die Grifffläche 96a entlang der Längsachse 92a über die Ausstülpungen 102a, 104a hinaus. Eine zu der Längsachse 92a senkrechte Ebene, welche die Ausstülpungen 102a, 104a schneidet, unterteilt eine maximale Längserstreckung 111a, 113a des Antriebsgehäuses 16a in einem Verhältnis zwischen 0,45 und 0,65. Insbesondere beträgt ein Verhältnis einer Ausstülpungsposition 139a der die Ausstülpungen 102a, 104a schneidenden Ebene entlang der Längsachse 92a ausgehend von einem entferntesten Punkt des Frontabschnitts 94a zu der maximale Längserstreckung 111a ohne Akkupack 138a zwischen 0,55 und 0,60. Insbesondere beträgt ein Verhältnis einer Ausstülpungsposition 139a der die Ausstülpungen 102a, 104a schneidenden Ebene entlang der Längsachse 92a ausgehend von einem entferntesten Punkt des Frontabschnitt 94a zu der maximalen Längserstreckung 113a einschließlich Akkupack 138a zwischen 0,5 und 0,55. Insbesondere ist die maximale Längserstreckung 111a, 113a parallel zu, insbesondere entlang, der Längsachse 92a größer als die Gesamthöhe 54a des Antriebsgehäuses 16a.

Der Materialauffangbehälter 112a ist in einer zur Drehachse 24a senkrechten Ebene beabstandet von der Grifffläche 96a des Antriebsgehäuses 16a angeordnet. Insbesondere ist der Materialauffangbehälter 112a mittels der Montageeinheit 124a der Materialauffangvorrichtung 116a, insbesondere freihängend und insbesondere ohne weitere Stützelemente nur, an dem Auswurfstutzen 76a angeordnet. Ein Übergang zwischen der Montageeinheit 124a und dem Materialauffangbehälter 112a ist in einer Ebene senkrecht zur Längsachse 92a mit dem Verjüngungsbereich 108a angeordnet. Eine Kanallängsachse 84a des Auswurfstutzens 76a der Verbindungsgehäuseeinheit 20a ist in einer zur Drehachse 24a senkrechten Ebene in einem spitzen Winkel, insbesondere zwischen 40° und 50°, bevorzugt zwischen 44° und 46°, zu der Längsachse 92a ausgerichtet. Die Kanallängsachse 84a ist vorzugsweise als Kanalmittenlängsachse ausgebildet, welche insbesondere durch einen geometrischen Schwerpunkt des Auswurfstutzens 76a verläuft. Die Handwerkzeugmaschine 118a weist ein, insbesondere von dem Betätigungselement 88a unterschiedliches, Bedienelement 117a zu einer Steuerung der Schleifvorrichtung 12a auf (vgl. Fig. 2), beispielsweise zu einer Anpassung einer Drehgeschwindigkeit des Schleifpads 132a. Beispielsweise ist das Bedienelement 117a als Drehregler ausgebildet. Das Bedienelement 117a und der Materialauffangbehälter 112a sind auf verschiedenen Seiten der durch die Drehachse 24a und die Längsachse 92a aufgespannten Montageebene 50a angeordnet. Das Antriebsgehäuse 16a weist einen Abstand von dem Materialauffangbehälter 112a auf, der zwischen 10 mm und 40 mm, bevorzugt zwischen 15 mm und 35 mm, besonders bevorzugt zwischen 20 mm und 30 mm, liegt. Vorzugsweise ist das Bedienelement 117a in dem Verjüngungsbereich 108a angeordnet. Das Bedienelement 117a und das Betätigungselement 88a sind vorzugsweise auf verschiedenen Seiten einer zur Drehachse 24a senkrechten Querebene 98a angeordnet, in welcher der Frontabschnitt 94a die größte Griffflächenquererstreckung 106a aufweist.

Figur 4 zeigt einen Längsschnitt der Handwerkzeugmaschine 118a in der Montageebene 50a und Figur 5 zeigt einen Querschnitt der Handwerkzeugmaschine 118a. Die Schleifvorrichtung 12a umfasst vorzugsweise einen Exzenter, der von einer Antriebswelle 26a angetrieben wird. Vorzugsweise umfasst die Schleifvorrichtung 12a ein Exzenterlager 158a, welches insbesondere als Kugellager ausgebildet ist. Optional umfasst das Exzenterlager 158a mehrere, insbesondere entlang der Drehachse 24a aneinander gestapelte, Kugellager oder ein mehrreihiges, insbesondere zweireihiges, Kugellager. Das Exzenterlager 158a ist insbesondere an dem Exzenter angeordnet und umgreift den Exzenter vorzugsweise in einer zu der Drehachse 24a senkrechten Ebene. Das Exzenterlager 158a ist insbesondere mittels einer Montageplatte und einer Schraube an einen Absatz des Exzenters geklemmt. Insbesondere ist ein geometrischer Mittelpunkt des Exzenterlagers 158a beabstandet von der Drehachse 24a angeordnet. Die Schleifvorrichtung 12a umfasst insbesondere einen ringförmigen Schleifpadhalter 156a. Der Schleifpadhalter 156a ist an dem Exzenterlager 158a angeordnet und umgreift dieses vorzugsweise in einer zur Drehachse 24a senkrechten Ebene. Vorzugsweise weist der Schleifpadhalter 156a eine Nut, in welcher das Exzenterlager 158a angeordnet ist, auf. Besonders bevorzugt ist das Exzenterlager mit dem Schleifpadhalter 156a umspritzt ausgebildet. Insbesondere ist der Schleifpadhalter 156a relativ zu dem Exzenter drehbar. Das Schleifpad 132a ist vorzugsweise an dem Schleifpadhalter 156a befestigt, insbesondere in einer zur Drehachse 24a parallelen Richtung verschraubt. Insbesondere optional umfasst die Schleifvorrichtung 12a einen Lüfter 66a. Der Lüfter 66a wird insbesondere von der Antriebswelle 26a betrieben. Vorzugsweise umgibt eine Beschaufelung des Lüfters 66a den Schleifpadhalter 156a in einer zu der Drehachse 24a senkrechten Ebene, wobei der Schleifpadhalter 156a in eine Richtung der Drehachse 24a über den Lüfter 66a hinausragt. Vorzugsweise umfasst die Schleifvorrichtung 12a einen Schleifring 154a aus einem elastischen Material, welcher an der Verbindungsgehäuseeinheit 20a in einer Nut drehfest mit der Verbindungsgehäuseeinheit 20a befestigt ist und insbesondere auf dem Schleifpad 132a aufliegt, insbesondere um eine Drehbewegung des Schleifpads 132a zu stabilisieren.

Vorzugsweise umfasst die Antriebsvorrichtung 14a einen Elektromotor 134a. Der Elektromotor 134a umfasst insbesondere einen Nennspannung von 12 Volt. Die Antriebsvorrichtung 14a umfasst die Antriebswelle 26a, welche insbesondere von dem Elektromotor 134a um die Drehachse 24a angetrieben wird. Die Antriebsvorrichtung 14a umfasst insbesondere eine elektrische Versorgungsschnittstelle 136a, insbesondere zu einem Anschluss des Akkupacks 138a. Vorzugsweise umfasst die Antriebsvorrichtung 14a zumindest eine Steuerelektronik 140a, insbesondere zu einer Steuerung des Elektromotors 134a. Vorzugsweise sind der Elektromotor 134a, die Steuerelektronik 140a und die elektrische Versorgungschnittstelle 136a entlang der Längsachse 92a, insbesondere in dieser Reihenfolge, angeordnet. Insbesondere ist der Elektromotor 134a in dem Frontabschnitt 94a angeordnet. Insbesondere ist die Steuerelektronik 140a in dem Verjüngungsbereich 108a angeordnet. Insbesondere ist die elektrische Versorgungsschnittstelle 136a in dem Längsachsenabschnitt 90a angeordnet. Die Antriebswelle 26a ragt bevorzugt ausgehend von dem Frontabschnitt 94a bis in die Schnittstellenvorrichtung 18a hinein.

Das Betätigungselement 88a ist in einer zur Längsachse 92a und zur Drehachse 24a schräg angeordneten Teilfläche der Grifffläche 96a angeordnet, insbesondere eingelassen. Die das Betätigungselement 88a aufnehmende Teilfläche weist bevorzugt einen Winkel zwischen 40° und 50° zur Längsachse 92a auf. Eine Projektion des Betätigungselements 88a entlang der Drehachse 24a weist insbesondere keine Überlappung mit dem Elektromotor 134a auf. Das Betätigungselement 88a und die Schleifvorrichtung 12a sind auf verschiedenen Seiten der zur Drehachse 24a zumindest im Wesentlichen senkrechten Querebene 98a angeordnet, in welcher der Frontabschnitt 94a die größte Griffflächenquererstreckung 106a aufweist. Ein Volumen des Elektromotors 134a ist insbesondere zu mehr als der Hälfte, bevorzugt zu mehr als 66%, besonders bevorzugt zu mehr als 75%, auf der dem Betätigungselement 88a gegenüberliegenden Seite der Querebene 98a angeordnet. Ein Volumen eines Aufnahmebereichs der elektrischen Versorgungsschnittstelle 136a zur Aufnahme des Akkupacks 138a ist vorzugsweise zwischen 40 % und 60 % auf der dem Betätigungselement 88a gegenüberliegenden Seite der Querebene 98a angeordnet. Insbesondere ist die das Betätigungselement 88a umgebende Teilfläche der Grifffläche 96a in der Montageebene 50a abgeflacht, insbesondere streckenweise eben, ausgebildet. Vorzugsweise weist der Frontabschnitt 94a in der Querebene 98a ein durchgehend gekrümmtes Profil auf. Teilflächen der Grifffläche 96a, von denen eine das Betätigungungselement 88a umgibt und die den Frontabschnitt 94a entlang der Längsachse 92a abschließen, sind in einen Frontwinkel 142a zwischen 95° und 110° zueinander angeordnet. Der Frontwinkel 142a liegt insbesondere in der Montageebene 50a. Insbesondere sind die den Frontabschnitt 94a abschließenden Teilflächen auf verschiedenen Seiten der die größte Griffflächenquererstreckung 106a aufweisenden und senkrecht zur Drehachse 24a verlaufenden Querebene 98a angeordnet.

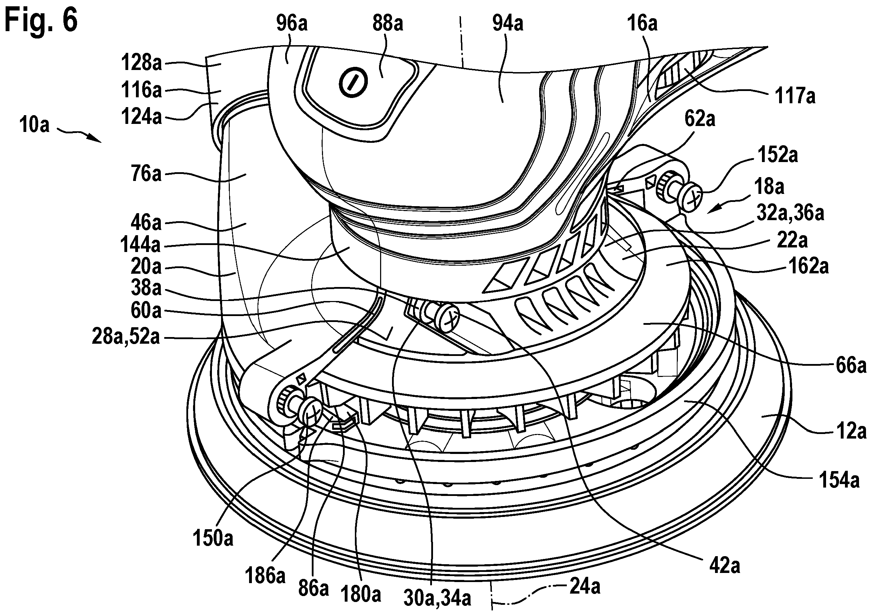

Ein Verhältnis einer zur Drehachse 24a parallelen maximalen Griffflächenhöhe 100a der Grifffläche 96a zu der dazu parallelen Gesamthöhe 54a des Antriebsgehäuses 16a liegt zwischen und 0,65 und 0,8, bevorzugt zwischen 0,7 und 0,75. Insbesondere erstreckt sich die Grifffläche 96a in eine Richtung der Drehachse 24a bis zu einem von der Schleifvorrichtung 12a zugewandten Ende des Elektromotors 134a. Vorzugsweise umfasst die Antriebsvorrichtung 14a einen Antriebslüfter 64, insbesondere einen Motorlüfter, insbesondere zu einer Kühlung des Elektromotors 134a. Der Antriebslüfter 64a ist an der Drehachse 24a zwischen dem Elektromotor 134a und der Schnittstellenvorrichtung 18a angeordnet. Vorzugsweise erstreckt sich die Grifffläche 96a in eine Richtung der Drehachse 24a bis zu einem Lüfterabschnitt 144a des Antriebsgehäuses 16a, in welchem Lüftungsöffnungen zu einem Ansaugen und/oder Ausblasen von Luft durch die Antriebslüfter 64a angeordnet sind. Vorzugsweise nimmt die Griffflächenhöhe 100a in einer Richtung der Längsachse 92a, insbesondere kontinuierlich, ab (vgl. auch Fig. 6). Vorzugsweise sind der Antriebslüfter 64a und der Längsachsenabschnitt 90a, insbesondere vollständig, auf verschiedenen Seiten einer zur Drehachse 24a senkrechten Ebene angeordnet. Vorzugsweise verjüngt sich der Frontabschnitt 94a in einer Richtung der Drehachse 24a zu dem Lüfterabschnitt 144a. Insbesondere ragt das Betätigungselement 88a entlang der Längsachse 92a zumindest teilweise über den Lüfterabschnitt 144a hinaus. Vorzugsweise weist eine Einheit aus Antriebsgehäuse 16a und Verbindungsgehäuseeinheit 20a an dem Lüfterabschnitt 144a einen zur Drehachse 24a senkrechten Querschnitt zwischen Betätigungselement 88a und Schleifvorrichtung 12a mit dem kleinsten Flächeninhalt auf. Insbesondere weist der Lüfterabschnitt 144a einen maximale Quererstreckung senkrecht zur Drehachse 24a von weniger als 65 mm, bevorzugt weniger als 60 mm, besonders bevorzugt weniger als 55 mm, auf.

Die Schnittstellenvorrichtung 18a umfasst eine an dem Antriebsgehäuse 16a angeordnete Andockschnittstelle 22a. Die Verbindungsgehäuseeinheit 20a umgreift die Andockschnittstelle 22a in einer zu der Drehachse 24a der Antriebswelle 26a der Antriebsvorrichtung 14a senkrechten Fixierebene 27a. Die Andockschnittstelle 22a weist in der Fixierebene 27a zumindest ein Axialformschlusselement 28a, 29a, 30a, 32a zur Bildung eines zur Drehachse 24a parallelen Formschlusses mit der Verbindungsgehäuseeinheit 20a auf. Eine Projektion des Axialformschlusselements 28a, 29a, 30a, 32a entlang der Drehachse 24a liegt zumindest im Wesentlichen vollständig im Inneren des Antriebsgehäuses 16a. Insbesondere umfasst die Andockschnittstelle 22a mehrere Axialformschlusselemente 28a, 29a, 30a, 32a, deren Projektionen entlang der Drehachse 24a zumindest im Wesentlichen vollständig im Inneren des Antriebsgehäuses 16a liegen. Insbesondere liegt eine Projektion der gesamten Andockschnittstelle 22a zumindest im Wesentlichen vollständig im Inneren des Antriebsgehäuses 16a. Die Andockschnittstelle 22a ist vorzugsweise entlang der Drehachse 24a an dem Frontabschnitt 94a angeordnet. Insbesondere ist der Lüfterabschnitt 144a zwischen dem Frontabschnitt 94a und der Andockschnittstelle 22a angeordnet. Bevorzugt die Andockschnittstelle 22a stoffschlüssig mit dem Antriebsgehäuse 16a ausgebildet. Insbesondere bezieht sich die Gesamthöhe 54a des Antriebsgehäuses 16a auf eine zur Drehachse 24a parallele Erstreckung, welche die Andockschnittstelle 22a miteinschließt.

Die Andockschnittstelle 22a umfasst als Axialformschlusselement 30a, 32a eine Fixierausnehmung 34a, 36a. Die Fixierausnehmung 34a, 36a erstreckt sich bevorzugt zumindest im Wesentlichen parallel zur der Fixierebene 27a. Die Fixierausnehmung 34a, 36a ist insbesondere dazu vorgesehen, ein Fixierelement 38a, 40a der Verbindungsgehäuseeinheit 20a und ein separat ausgebildetes Fixierelement 42a, 44a aufzunehmen. Das Fixierelement 38a, 40a der Verbindungsgehäuseeinheit 20a ist als Hülse, besonders bevorzugt als Schraubendom, ausgebildet. Die Hülse ist zu einer Aufnahme des separat ausgebildeten Fixierelements 42a, 44a ausgebildet. Das separat ausgebildete Fixierelement 42a, 44a ist vorzugsweise als Schraube ausgebildet. Eine Gesamtaufnahmelänge der Hülse entspricht insbesondere im Wesentlichen, aber insbesondere nicht vollständig, einer Länge des separat ausgebildeten Fixierelements 42a, 44a. Insbesondere umfasst die Hülse zwei Hülsenabschnitte, von denen je eine an den beiden Hauptschalen 46a, 48a angeordnet ist, so dass ein Luftspalt zwischen den beiden Hülsenabschnitten besteht. Insbesondere werden die Hauptschalen 46a, 48a durch ein Festziehen des separat ausgebildeten Fixierelements 42a, 44a in der Hülse auf Zug an der Andockschnittstelle 22a befestigt. Insbesondere greift das separat ausgebildete Fixierelement 42a, 44a in die Andockschnittstelle 22a hinein, insbesondere hindurch. Vorzugsweise umfasst die Andockschnittstelle 22a in der Fixierebene 27a zumindest zwei, insbesondere genau zwei, Exemplare des Fixierelements 38a, 40a je Hauptschale 46a, 48a und insbesondere zumindest zwei, insbesondere genau zwei, Exemplare des separat ausgebildeten Fixierelements 42a, 44a, welche insbesondere auf verschiedenen Seiten einer zur Längsachse 92a senkrechten und die Drehachse 24a umfassenden Ebene angeordnet sind. Optional umfasst die Verbindungsgehäuseeinheit 20a zumindest ein Zusatzfixierelement 150a, 152a, welches dazu vorgesehen ist, die Hauptschalen 46a, 48a an einer von der Fixierebene 27a beabstandeten Position aneinander zu befestigen. Vorzugsweise umfasst die Verbindungsgehäuseeinheit 20a zumindest zwei Zusatzfixierelemente 150a, 152a, welche insbesondere zwischen der Fixierebene 27a, insbesondere zwischen einem dem Schleifpad 132a zugewandten Ende der Andockschnittstelle 22a, und dem Schleifpad 132a angeordnet sind. Insbesondere sind die Zusatzfixierelemente 150a, 152a als Schrauben ausgebildet. Vorzugsweise sind Zusatzfixierausnehmungen der Hauptschalen 46a, 48a zu einer Aufnahme der Zusatzfixierelemente 150a, 152a in einer zu Fixierebene 27a parallelen Ebene angeordnet, welche die größte Quererstreckung der Verbindungsgehäuseeinheit 20a in der Montageebene 50a aufweist.

Die Andockschnittstelle 22a umfasst als Axialformschlusselement 28a senkrecht zur Drehachse 24a einen Andockquerschnitt, der sich entlang der Drehachse 24a in einer von der Schleifvorrichtung 12a wegweisenden, und insbesondere zu dem Lüfterabschnitt 144a hinführenden, Richtung verjüngt. Insbesondere ist die Fixierausnehmung 34a, 36a zwischen einem maximalen Querschnitt der Andockschnittstelle 22a senkrecht zur Drehachse 24a und einem minimalen Querschnitt der Andockschnittstelle 22a senkrecht zur Drehachse 24a angeordnet. Vorzugsweise umfasst die Andockschnittstelle 22a eine Anlagefläche 52a, welche an einer die Verjüngung ausbildenden Oberfläche der Andockschnittstelle 22a gebildet wird. Die Anlagefläche 52a ist insbesondere von der Schleifvorrichtung 12a abgewandt und insbesondere der Antriebsvorrichtung 14a zugewandt angeordnet. Die Hauptschalen 46a, 48a weisen insbesondere eine zur der Anlagefläche 52a komplementäre Gegenfläche an einer ihrer jeweiligen Innenwand auf. Die Gegenflächen der Hauptschalen 46a, 48a sind insbesondere an der Anlagefläche 52a angeordnet und besonders bevorzugt mittels der Fixierelemente 42a, 44a an die Anlagefläche 52a flächig angepresst. Die Andockschnittstelle 22a weist als axiales Axialformschlusselement 29a an einer zu der Drehachse 24a zumindest im Wesentlichen senkrechten Grenzfläche zu dem Antriebsgehäuse 16a, insbesondere zu dem Lüfterabschnitt 144a, einen kleineren Querschnitt auf als das Antriebsgehäuse 16a. Insbesondere entspricht ein Unterschied in den Querschnitten der Andockschnittstelle 22a und des Antriebsgehäuses 16a an der Grenzfläche einer, insbesondere der doppelten, Wandstärke der Verbindungsgehäuseeinheit 20a. Ein die Gegenflächen ausbildender Abschnitt der Hauptschalen 46a, 48a erstreckt sich vorzugsweise entlang der Anlagefläche bis zu der Grenzfläche hin. Die Verbindungsgehäuseeinheit 20a ist zumindest im Wesentlichen bündig mit dem Antriebsgehäuse 16a an der Andockschnittstelle 22a angeordnet. Die Andockschnittstelle 22a, insbesondere die Anlagefläche 52a, umfasst zumindest 10 % bis 20 % der Gesamthöhe 54a des Antriebsgehäuses 16a inklusive der Andockschnittstelle 22a parallel zur Drehachse 24a. Vorzugsweise liegt ein Verhältnis einer Andockhöhe der Andockschnittstelle 22a parallel zur Drehachse 24a zu einer maximalen Quererstreckung, insbesondere einem maximalen Durchmesser, der Andockschnittstelle 22a senkrecht zur Drehachse zwischen 0,1 und 0,3, bevorzugt zwischen 0,15 und 0,2. Vorzugsweise liegt ein Verhältnis der Andockhöhe der Andockschnittstelle 22a parallel zur Drehachse zu einer minimalen Quererstreckung, insbesondere einem minimalen Durchmesser, der Andockschnittstelle 22a senkrecht zur Drehachse 24a zwischen 0,15 und 0,35, bevorzugt zwischen 0,2 und 0,25. Vorzugsweise entspricht ein Abstand parallel zur Drehachse 24a zwischen der maximalen Quererstreckung und der minimalen Quererstreckung der Andockschnittstelle 22a senkrecht zur Drehachse 24a zumindest 60%, bevorzugt mehr als 75%, der Andockhöhe.

Die Anlagefläche 52a verläuft quer zur Fixierebene 27a und ist gekrümmt ausgebildet. Die Gegenfläche weist eine zu der Anlagefläche 52a komplementäre Krümmung auf. Die Krümmung der Anlagefläche 52a und insbesondere der Gegenfläche sind vorzugsweise bezüglich der Drehachse 24a konkav ausgebildet. Ein die Anlagefläche 52a, und insbesondere die Gegenfläche, beschreibender Krümmungsradius verläuft außerhalb der Andockschnittstelle 22a, und insbesondere durch die Verbindungsgehäuseeinheit 20a hindurch. Der Krümmungsradius beträgt zwischen 5 mm und 15 mm, bevorzugt zwischen 9 mm und 10 mm. Vorzugsweise liegt ein zu dem Krümmungsradius gehörender Krümmungsmittelpunkt außerhalb der Verbindungsgehäuseeinheit 20a. Optional nimmt die Wandstärke der Verbindungsgehäuseeinheit 20a entlang der Krümmung in Richtung des Antriebsgehäuses 16a hin ab. Alternativ ist die Wandstärke der Verbindungsgehäuseeinheit 20a entlang der Krümmung konstant. Vorzugsweise umfasst die Anlagefläche 52a einen ebenen Anlageabschnitt, der die Krümmung der Andockschnittstelle 22a tangential in Richtung des Schleifpads 132a fortsetzt. Insbesondere ist der ebene Anlageabschnitt der Anlagefläche 52a gegenüber der Fixierebene 27a um einen Winkel zwischen 10° und 20° in Richtung des Schleifpads 132a geneigt. Ein die Gegenflächen ausbildender Abschnitt der Hauptschalen 46a, 48a erstreckt sich vorzugsweise über den ebenen Anlagenabschnitt hinaus, insbesondere unter dem gleichen Winkel zur Fixierebene 27a wie der ebene Anlagenabschnitt der Anlagefläche 52a. Diese Erstreckung der Hauptschalen 46a, 48a setzt sich insbesondere bis zu einem Ende der Verbindungsgehäuseeinheit 20a in diese Richtung oder bis zu den Zusatzfixierausnehmungen oder bis zu dem Auswurfstutzen 76a fort. Insbesondere bildet eine der Antriebsvorrichtung 14a zugewandte Oberseite der Hauptschalen 46a, 48a eine, insbesondere relativ zu dem Schleifpad 132a geneigte, insbesondere von der Drehachse 24a nach außen hin abfallende, Handablagefläche aus, insbesondere zu einer Unterstützung einer natürlichen Handhaltung bei einer Anordnung von Daumen und Zeigefinger auf verschieden Seiten der Drehachse 24a. Die Hauptschalen 46a, 48a sind mittels zumindest einer, insbesondere gekrümmten, bevorzugt bezüglich der Drehachse 24a konvex geformten, Nut-Feder-Verbindung 60a, 62a der Verbindungsgehäuseeinheit 20a in der Fixierebene 27a aneinander ausgerichtet.

In Figur 6 ist die Schnittstellenvorrichtung 18a ohne eine der Hauptschalen 48a dargestellt. Die Andockschnittstelle 22a weist als Grundkörper insbesondere einen Rotationskörper bezüglich der Drehachse 24a auf. Alternativ ist der Grundkörper der Andockschnittstelle 22a parallel zur Längsachse 92a gestreckt ausgebildet und weist insbesondere einen ellipsenförmigen oder spitz zulaufenden Querschnitt senkrecht zur Drehachse 24a auf. Die Andockschnittstelle 22a weist in den Grundkörper eingelassene Vertiefungen, Zugangsschächte insbesondere für die Hülse der Hauptschalen 46a, 48a und das separat ausgebildete Fixierelement 42a, 44a, und/oder Lüftungsöffnungen auf.

Ferner ist den Figuren 4 und 5 zu entnehmen, dass die Schnittstellenvorrichtung 18a ein Getriebeelement 58a umfasst. Das Getriebeelement 58a der Schnittstellenvorrichtung 18a ist insbesondere als Exzenterschaft ausgebildet. Das Getriebeelement 58a der Schnittstellenvorrichtung 18a ist vorzugsweise separat von der Antriebsvorrichtung 14a und der Schleifvorrichtung 12a ausgebildet. Vorzugsweise ist das Getriebeelement 58a der Schnittstellenvorrichtung 18a auf die Antriebswelle 26a entlang der Drehachse 24a aufgepresst und insbesondere drehfest mit der Antriebswelle 26a verbunden. Vorzugsweise ist der Exzenter, insbesondere zusammen mit der bereits erwähnten Montageplatte, an dem Getriebeelement 58a der Schnittstellenvorrichtung 18a angeschraubt und insbesondere drehfest mit dem Getriebeelement 58a der Schnittstellenvorrichtung 18a verbunden. Alternativ ist das Getriebeelement 58a einteilig mit der Antriebswelle 26a oder mit dem Exzenter der Schleifvorrichtung 12a ausgebildet. Die Andockschnittstelle 22a umgreift in der Fixierebene 27a ein Lagerelement 56a der Antriebsvorrichtung 14a, welches zu einer drehbaren Lagerung des Getriebeelements 58a der Schnittstellenvorrichtung 18a eingerichtet ist. Vorzugsweise erstreckt sich die Antriebswelle 26a entlang der Drehachse 24a bis in das Lagerelement 56a hinein, insbesondere durch das Lagerelement 56a hindurch. Vorzugsweise umgibt das Getriebeelement 58a die Antriebswelle 26a in der Fixierebene 27a, so dass die Antriebswelle 26a insbesondere nicht in direktem Kontakt mit dem Lagerelement 56a steht. Insbesondere ist das Lagerelement 56a als Kugellager ausgebildet. Vorzugsweise erstreckt sich das Getriebeelement 58a der Schnittstellenvorrichtung 18a entlang der Drehachse 24a durch das Lagerelement 56a hindurch. Insbesondere umfasst das Getriebeelement 58a der Schnittstellenvorrichtung 18a zu einem axialen Formschluss entlang der Drehachse 24a mit dem Lagerelement 56a auf einer der Antriebsvorrichtung 14a zugewandten Seite der Fixierebene 27a eine größeren maximale Quererstreckung senkrecht zur Drehachse 24a als auf einer der Schleifvorrichtung 12a zugewandten Seite der Fixierebene 27a. Vorzugsweise ist der Lüfter 66a der Schleifvorrichtung 12a an dem Getriebeelement 58a der Schnittstellenvorrichtung 18a angeordnet, insbesondere zu einer zentrischen Drehung um die Drehachse 24a. Der Lüfter 66a ist in Figur 5 nicht dargestellt, um einen Blick auf eine Innenwandung 70a der Hauptschalen 46a, 48a zu gewähren.

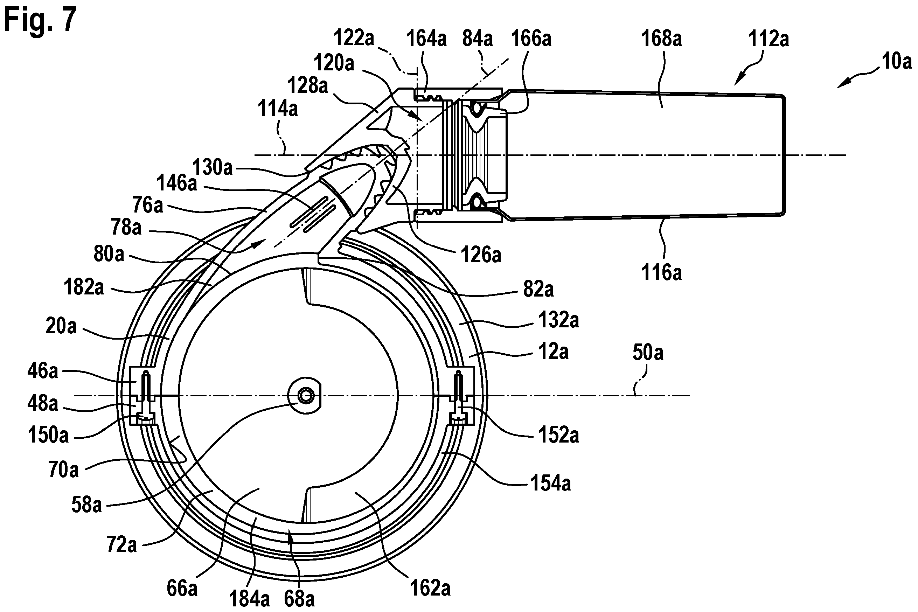

Der Lüfter 66a ist zur Bildung eines Getriebeelements der Schleifvorrichtung 12a asymmetrisch ausgebildet. Insbesondere bildet der Lüfter 66a den Exzenter aus. Insbesondere weist der Lüfter 66a eine, insbesondere massive, scheibenförmige Grundplatte auf, an welcher die Beschaufelung des Lüfters 66a befestigt ist. Die Grundplatte ist vorzugsweise der Andockschnittstelle 22a zugewandt und ist insbesondere in derselben Ebene senkrecht zur Drehachse 24a angeordnet wie die Zusatzfixierelemente 150a, 152a. Die Beschaufelung des Lüfters 66a ist vorzugsweise dem Schleifpad 132a zugewandt. Insbesondere weist der Lüfter 66a als Exzenter einen Zentralschaft auf, der in einer Ebene senkrecht zur Drehachse 24a von der Beschaufelung umgeben ist. Insbesondere ist der Zentralschaft exzentrisch zu der Grundplatte an der Grundplatte angeordnet. Das Getriebeelement 58a der Schnittstellenvorrichtung 18a greift vorzugsweise in den Exzenter ausbildenden Zentralschaft des Lüfters 66a ein und ist insbesondere drehfest mit diesem verbunden (vgl. Fig. 7). Vorzugsweise weist der Lüfter 66a zumindest ein Lüftergegengewicht 148a auf, welches innerhalb der Beschaufelung angeordnet ist. Insbesondere ist eine Form des Lüftergegengewichts 148a an eine Form der Beschaufelung angepasst. Vorzugsweise weist die Grundplatte des Lüfters 66 eine Absenkung 162a auf, welche zumindest im Wesentlichen parallel zu der Drehachse 24a gegenüber der restlichen Grundplatte versetzt angeordnet ist. Die Absenkung 162a ist insbesondere halbringförmig ausgebildet. Die Absenkung 162a und das Lüftergegengewicht 148a, insbesondere zusammen mit einem Teil der Beschaufelung, ist vorzugsweise an der Absenkung 162a angeordnet. Bei einem Schnitt des Lüfters 66a entlang einer die Drehachse 24a umfassenden Ebene, sind die Absenkung 162a und das Lüftergegengewicht 148a insbesondere in einer Hälfte des Lüfters 66a angeordnet, welche einen kleineren Volumenanteil des als Exzenter ausgebildeten Zentralschafts umfasst. Eine Höhe der Beschaufelung an der Absenkung 162a parallel zur Drehachse 24a ist vorzugsweise kleiner als eine Höhe des restlichen Teils der Beschaufelung, insbesondere so dass die gesamte Beschaufelung des Lüfters 66a eine gemeinsame Abschlussebene senkrecht zur Drehachse 24a aufweist. Der Antriebslüfter 64a der Antriebsvorrichtung 14a und der Lüfter 66a der Schleifvorrichtung 12a sind in einer Richtung der Drehachse 24a auf verschiedenen Seiten des Axialformschlusselements 28a, 29a, 30a, 32a angeordnet. Insbesondere schließt die Andockschnittstelle 22a einen Aufnahmeraum des Antriebsgehäuses 16a, in welchem der Antriebslüfter 64a angeordnet ist, an der Grenzfläche ab. Insbesondere begrenzt ein Ende der Andockschnittstelle 22a entlang der Drehachse 24a einen Lüfteraufnahmebereich 68a, in welchem der Lüfter 66a angeordnet ist.

Die Schleifvorrichtung 12a umfasst den Lüfter 66a zu einem Abtransport von bei einem Schleifvorgang abgetragenem Material. Die den Lüfteraufnahmebereich 68a begrenzende Innenwandung 70a der Verbindungsgehäuseeinheit 20a zu einer Führung eines durch den Lüfter 66a erzeugten Luftstroms ist trichterförmigen um die Drehachse 24a der Antriebswelle 26a der Antriebsvorrichtung 14a ausgebildet. Insbesondere verengt sich der Lüfteraufnahmebereich 68a entlang der Drehachse 24a ausgehend von der zur Drehachse 24a senkrechten Ebene, in welcher die Zusatzfixierelemente 150a, 152a angeordnet sind, in Richtung des Schleifpads 132a. Die Hauptschalen 46a, 48a der Verbindungsgehäuseeinheit 20a umgeben den Lüfter 66a in der zur Drehachse 24a parallelen Montageebene 50a zumindest teilweise. Insbesondere umgeben die Hauptschalen 46a, 48a den Lüfter 66a, insbesondere dessen Beschaufelung, in einer zu Drehachse 24a parallelen Richtung. Insbesondere umfassen die Hauptschalen 46a, 48a zumindest einen Bodenabschnitt 180a, welcher zwischen dem Lüfter 66a und dem Schleifpad 132a angeordnet ist. Die Verbindungsgehäuseeinheit 20a weist einen Lufteinlass 74a auf. Der Lufteinlass 74a ist vorzugsweise in dem Bodenabschnitt 180a der Hauptschalen 46a, 48a angeordnet. Der Bodenabschnitt 180a weist insbesondere eine dem Lüfter 66a zugewandte Bodenoberfläche auf, welche zumindest im Wesentlichen senkrecht zur Drehachse 24a verläuft. Eine maximale Quererstreckung der Bodenoberfläche senkrecht zur Drehachse 24a ist insbesondere kleiner als eine maximale Quererstreckung des Lüfters 66a senkrecht zur Drehachse 24a. Der Schleifpadhalter 156a ragt insbesondere durch den Lufteinlass 74a hindurch, insbesondere ohne Kontakt mit den Hauptschalen 46a, 48a. Vorzugsweise sind das Exzenterlager 158a, das Getriebeelement 58a und/oder der Exzenter zumindest im Wesentlichen bündig mit dem Bodenabschnitt 180a der Hauptschalen 46a, 48a angeordnet oder in Richtung der Antriebsvorrichtung 14a relativ zu dem Bodenabschnitt 180a zurückversetzt angeordnet.

Die Innenwandung 70a ist in eine Richtung der Drehachse 24a segmentiert. Eine Mündungsöffnung 78a des Auswurfstutzens 76a der Verbindungsgehäuseeinheit 20a und der Lufteinlass 74a der Verbindungsgehäuseeinheit 20a sind in verschiedenen Segmenten der Innenwandung 70a angeordnet. Die Mündungsöffnung 78a ist insbesondere in einem Auswurfsegment 182a der Verbindungsgehäuseeinheit 20a angeordnet. Die Innenwandung 70a verläuft in dem Auswurfsegment 182a vorzugsweise zumindest im Wesentlichen senkrecht zur Drehachse 24a. Das Auswurfsegment 182a ist insbesondere in der Ebene mit den Zusatzfixierelementen 150a, 152a angeordnet. Vorzugsweise umfasst die Verbindungsgehäuseeinheit 20a zumindest ein Führungssegment 184a, welches in eine Richtung der Drehachse 24a zwischen dem Auswurfsegment 182a und dem Bodenabschnitt 180a angeordnet ist. Die Innenwandung 70a verläuft in dem Führungssegment 184a insbesondere unter einem spitzen Winkel zur Drehachse 24a. Vorzugsweise umfasst die Verbindungsgehäuseeinheit 20a zumindest ein weiteres Führungssegment 186a, welches zwischen dem Führungssegment 184a und dem Bodenabschnitt 180a angeordnet ist. Insbesondere weist die Innenwandung 70a in einem weiteren Führungssegment 186a einen Winkel zur Drehachse 24a auf, der größer ist als der Winkel des Führungssegments 184a zu der Drehachse 24a. Insbesondere sind die Abschnitte des Auswurfsegments 182a, das Führungssegment 184a, das weitere Führungssegment 186a und der Bodenabschnitt 180a und der Abschnitt, der die Gegenfläche ausbildet, einer der Hauptschalen 46a, 48a einteilig miteinander ausgebildet.

Die Verbindungsgehäuseeinheit 20a weist eine an der Innenwandung 70a angeordnete konische Spiralbahn 72a auf. Die Spiralbahn 72a führt insbesondere von dem Lufteinlass 74a der Verbindungsgehäuseeinheit 20a in eine Richtung der Drehachse 24a zu dem Auswurfstutzen 76a der Verbindungsgehäuseeinheit 20a hin. Insbesondere ist die konische Spiralbahn 72a in dem Führungssegment 184a angeordnet. Figur 7 zeigt einen zur Drehachse 24a senkrechten Querschnitt durch das Auswurfsegment 182a. Der Lüfteraufnahmebereich 68a ist vorzugsweise asymmetrisch ausgebildet. Insbesondere weist die Innenwandung 70a aufgrund der Spiralbahn 72a in einer Ebene senkrecht zur Drehachse 24a einen Abstand zur Drehachse 24a auf, der abhängig ist von einer auf die Drehachse 24a bezogenen Winkelposition. Die Mündungsöffnung 78a des Auswurfstutzens 76a bildet zusammen mit der Innenwandung 70a insbesondere eine Abscheidekante 82a, die zumindest im Wesentlichen parallel zu der Drehachse 24a verläuft. Vorzugsweise ist der Abstand der Innenwandung 70a von der Drehachse 24a an der Abscheidekante 82a am geringsten. Vorzugsweise nimmt der Abstand der Innenwandung 70a von der Drehachse 24a kontinuierlich zu oder bleibt streckenweise konstant. Besonders bevorzugt nimmt der Abstand der Innenwandung 70a von der Drehachse 24a linear mit einer Winkeldifferenz zu einer Winkelposition der Abscheidekante 82a zu, hier insbesondere im Uhrzeigersinn dargestellt. Optional ist die Spiralbahn 72a in nur einer der Hauptschalen 48a ausgebildet, während der Abstand des Führungssegments 184a in der Hauptschale 46a mit dem Auswurfstutzen 76a streckenweise konstant gehalten wird. Vorzugsweise weist die konische Spiralbahn 72a eine zur Drehachse 24a parallele Ganghöhe auf, mit welcher die Spiralbahn 72a in höchster einer Umdrehung, vorzugsweise einer halben Umdrehung, von dem weiteren Führungssegment 186a bis zu der Mündungsöffnung 78a führt. Das die Spiralbahn 72a ausbildende Führungssegment 184a der Innenwandung 70a weist einen Winkel zwischen 25 und 40°, bevorzugt zwischen 30° und 35°, zu der Drehachse 24a in einer die Drehachse 24 umfassenden Ebene auf.

Vorzugsweise weist die Spiralbahn 72a, insbesondere das Führungssegment 184a, bei einer Projektion entlang der Drehachse 24 keinen Überlapp mit dem Lüfter 66a auf. Vorzugsweise ist das weitere Führungssegment 184a bei einer Projektion entlang der Drehachse 24 zu mehr als 50 %, insbesondere zu mehr als 75 %, bevorzugt zu mehr als 90 %, im Inneren des Lüfters 66a angeordnet. Die Beschaufelung des Lüfters 66a weist eine Fase 86a auf (siehe Figur 4). Die Fase 86a ist quer zur Drehachse 24a und zumindest im Wesentlichen parallel zu dem weiteren Führungssegment 186a der Innenwandung 70a angeordnet. Vorzugsweise weist die Innenwandung 70a in dem weiteren Führungssegment 186a und insbesondere die Fase 86a einen Winkel zur Drehachse 24a in einer die Drehachse 24 umfassenden Ebene zwischen 50° und 70°, insbesondere zwischen 55° und 65°, auf.

Eine von der Mündungsöffnung 78a des Auswurfstutzens 76a der Verbindungsgehäuseeinheit 20a gebildete weitere Abscheidekante 80a verläuft zumindest im Wesentlichen senkrecht zur Drehachse 24a. Insbesondere trennt die weitere Abscheidekante 80a das Auswurfsegment 182a von dem Führungssegment 184a. Die weitere Abscheidekante 80a setzt insbesondere die Spiralbahn 72a im Bereich der Mündungsöffnung 78a bis zur der Abscheidekante 82a mit einem konstanten Abstand zur Drehachse 24a fort. Die weitere Abscheidekante 80a ist insbesondere auf einer Höhe entlang der Drehachse 24a zwischen der Grundplatte des Lüfters 66a und der Abschlussebene der Beschaufelung angeordnet. Die von der Mündungsöffnung 78a des Auswurfstutzens 76a der Verbindungsgehäuseeinheit 20a gebildete zumindest im Wesentlichen parallel zur Drehachse 24a verlaufende Abscheidekante 82a ist spitz zulaufend ausgebildet und weist einen Krümmungsradius von weniger als 10 mm, bevorzugt von weniger als 3 mm, besonders bevorzugt von weniger als 2 mm, auf. Der Krümmungsradius der Abscheidekante 82a liegt insbesondere in einer zur Drehachse 24a senkrechten Ebene. Der Krümmungsradius der Abscheidekante 82a beschreibt insbesondere unabhängig von einer genauen Formgebung der Abscheidekante 82a einen kleinsten gedachten Kreis, der sowohl an der dem Lüfter 66a zugewandten Innenwandung 70a und einer Innenwand des Auswurfstutzens 76a anliegt. Bevorzugt schließen an der Innenwandung 70a und der Innenwand des Auswurfstutzens 76a anliegende Tangenten in einer zur Drehachse 24a senkrechten Ebene einen Winkel zwischen 45° und 65° ein, bevorzugt zwischen 55° und 60° ein.

Die Kanallängsachse 84a verläuft mittig durch en Auswurfstutzen 76a und gibt insbesondere eine Hauptströmungsrichtung von Luft durch den Auswurfstutzten 76a vor. Eine Projektion der Kanallängsachse 84a entlang der Drehachse 24a liegt vorzugsweise tangential an einer Außenkontur des Lüfter 66a an. Vorzugsweise schließt die Projektion der Kanallängsachse 84a entlang der Drehachse 24a einen Winkel zwischen 40° und 50°, besonders bevorzugt zwischen 44° und 46°, zu der Montageebene 50a ein. Eine der Abscheidekante 82a gegenüberliegende Innenwand der Auswurfstutzens 76a erstreckt sich vorzugsweise von der Montageebene 50a bis zu einem Auswurföffnung des Auswurfstutzens 76a, wobei ein Abstand dieser Innenwand von der Drehachse 24a in der Montageebene 50a an den Abstand der Spiralbahn 72a angepasst ist und in Richtung der Auswurföffnung kontinuierlich größer wird. Die Kanallängsachse 84a des Auswurfstutzens 76a der Verbindungsgehäuseeinheit 20a schließt einen spitzen Winkel, insbesondere zwischen 15° und 35°, bevorzugt zwischen 20° und 30°, mit einer zur Drehachse 24a senkrechten Ebene ein. Die Kanallängsachse 84a neigt sich in eine Richtung der Drehachse 24a insbesondere ausgehend von der Mündungsöffnung 78a von der Schleifvorrichtung 12a weg. Der Auswurfstutzten 76a weist an der Mündungsöffnung 78a insbesondere einen rechteckförmigen Querschnitt senkrecht zur Kanallängsachse 84a auf. Der Auswurfstutzen 76a weist vorzugsweise an der Auswurföffnung einen kreisförmigen Querschnitt senkrecht zur Kanallängsachse 84a auf. Eine Schutzvorrichtung 146a, insbesondere in Form von zur Kanallängsachse 84a parallelen Stegen, zur Vermeidung eines Einführens eines Fingers und/oder anderer Fremdkörper in den Auswurfstutzen 76a, ist vorzugsweise in einem Abschnitt des Auswurfstutzens 76a angeordnet, der den rechteckförmigen Querschnitt aufweist.

Insbesondere ist die Materialauffangvorrichtung 116a an dem Bereich des Auswurfstutzens 76a mit dem kreisförmigen Querschnitt angeordnet. Der Materialauffangbehälter 112a weist zumindest eine Öffnung 120a zu einer Einspeisung des Materials in den Materialauffangbehälter 112a auf. Die Öffnung 120a des Materialauffangbehälters 112a ist in einer Öffnungsebene 122a angeordnet. Die Öffnungsebene 122a ist vorzugsweise in zumindest einem an dem Auswurfstutzen 76a angeordneten Zustand der Materialauffangvorrichtung 116a zumindest im Wesentlichen senkrecht zur Längsachse 92a ausrichtbar. Vorzugsweise umfasst der Materialauffangbehälter 112a genaue eine Öffnung 120a in der Öffnungsebene 122a. Alternativ umfasst die Materialauffangvorrichtung 116a in der Öffnungsebene 122a ein Strukturelement, welches die Öffnung 120a in kleine Teilöffnungen untergliedert. Vorzugsweise ist die Behälterlängsachse 114a des Materialauffangbehälters 112a zumindest im Wesentlichen senkrecht zur der Öffnungsebene 122a ausgerichtet. Insbesondere weist der Materialauffangbehälter 112a parallel zu, insbesondere entlang, der Behälterlängsachse 114a die größte Längserstreckung auf. Insbesondere ist der Materialauffangbehälter 112a rotationssymmetrisch um die Behälterlangsachse 114a ausgebildet.

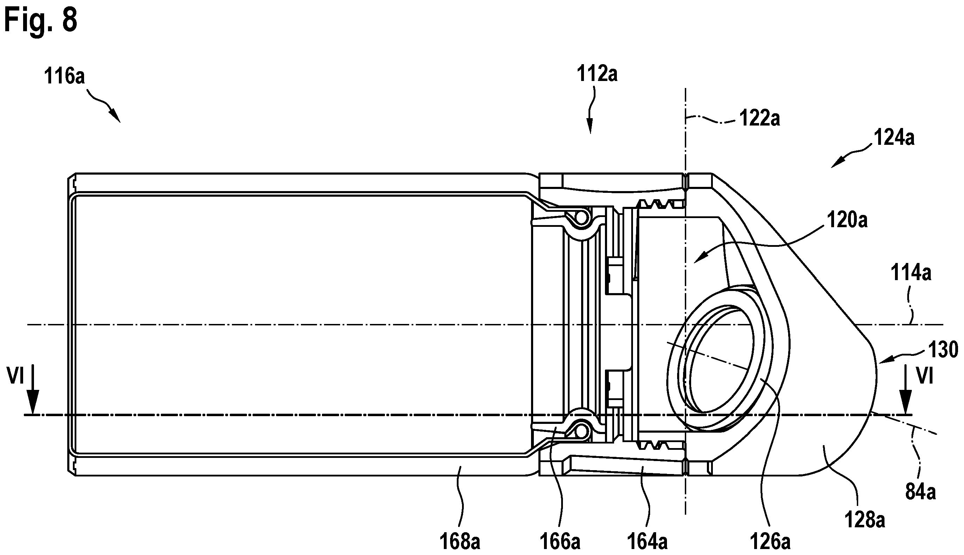

Die Materialauffangvorrichtung 116a umfasst zumindest eine Montageeinheit 124a zu einer Montage des Materialauffangbehälters 112a an der Handwerkzeugmaschine 118a. Die Montageeinheit 124a umfasst das Kanalelement 126a zur Verbindung mit dem Auswurfstutzen 76a der Handwerkzeugmaschine 118a. Das Kanalelement 126a ist insbesondere dazu vorgesehen, konzentrisch an dem Auswurfstutzten 76a angeordnet zu werden und weist in einem an dem Auswurfstutzen 76a angeordneten Zustand die gleiche Kanallängsachse 84a wie der Auswurfstutzen 76a auf. Die Kanallängsachse 84a des Kanalelements 126a ist in zumindest einer senkrecht zur Öffnungsebene 122a verlaufenden Schnittebene quer zur Öffnungsebene 122a des Materialauffangbehälters 112a angeordnet. Die Kanallängsachse 84a ist in einer zu der Schnittebene und der Öffnungsebene 122a senkrechten weiteren Schnittebene quer zu Öffnungsebene 122a angeordnet. Insbesondere sind die Kanallängsachse 84a und die Behälterlängsachse 114a windschief angeordnet. In Figur 7 ist ein zur Schnittebene paralleler Längsschnitt der Handwerkzeugmaschine 118a in einer senkrecht zur Drehachse 24a gezeigten Konfiguration zu sehen. In Figur 8 ist ein zur weiteren Schnittebene paralleler Längsschnitt der Materialauffangvorrichtung 116a gezeigt. Die Behälterlängsachse 114a ist im an der Handwerkzeugmaschine montierten Zustand der Materialauffangvorrichtung, zumindest im Wesentlichen parallel zu der Montageebene 50a anordenbar, insbesondere wobei die Behälterlängsachse 114a parallel zur Längsachse 92a ausgerichtet ist. Bei einer Ausrichtung der Behälterlängsachse 114a parallel zur Längsachse 92a ist die weitere Schnittebene insbesondere parallel zur Montageebene 50a angeordnet. Die Behälterlängsachse 114a des Materialauffangbehälters 112a schließt relativ zu der Montageebene 50a einen Winkel ein, der addiert mit einem Winkel zwischen der Kanallängsachse 84a und der Behälterlängsachse 114a einen Summenwinkel zwischen 80° und 100°, besonders bevorzugt von 90°, bildet. Insbesondere schneidet die Kanallängsachse 84a die Öffnungsebene 122a in der Schnittebene unter einem Winkel zwischen 40° und 50°, bevorzugt zwischen 44° und 46°. Insbesondere schneidet die Kanallängsachse 84a die Öffnungsebene 122a in der weiteren Schnittebene in einem Winkel zwischen 15° und 30°.

Das Kanalelement 126a ist vorzugsweise entlang der Kanallängsachse 84a auf den Auswurfstutzen 76a aufgesteckt. Vorzugsweise weist eine Innenwand des Kanalelements 126a und/oder eine Außenwand des Auswurfstutzens 76a Strukturelemente zu einem, insbesondere von Hand lösbaren und herstellbaren, Kraftschluss des Kanalelements 126a mit dem Auswurfstutzen 76a auf, beispielsweise Stege oder Noppen mit Presspassung und/oder eine Ummantelung mit einem elastischen Material oder dergleichen. Vorzugsweise ist die Materialauffangvorrichtung 116a, insbesondere zumindest unter moderatem Kraftaufwand, drehbar an dem Auswurfstutzen 76a angeordnet. Insbesondere übersteigt der moderate Kraftaufwand, der notwendig ist, die Materialauffangvorrichtung 116a an dem Auswurfstutzen 76a zu drehen, eine Gewichtskraft der Materialauffangvorrichtung 116a, insbesondere in einem mit durch die Schleifvorrichtung 12a abgetragenem Material gefüllten Zustand des Materialauffangbehälters 112a. Vorzugsweise ist der moderate Kraftaufwand von einer Hand ohne Werkzeug aufbringbar, insbesondere kleiner 200 N, bevorzugt kleiner 125 N, besonders bevorzugt kleiner 75 N. Insbesondere verharrt die Materialauffangvorrichtung 116a ohne manuelle Betätigung in einer aktuellen Drehposition bezüglich des Auswurfstutzens 76a. Durch eine Drehung der Materialauffangvorrichtung 116a um die Kanallängsachse 84a ändert sich eine relative Position der Behälterlängsachse 114a zu der Drehachse 24a und/oder der Längsachse 92a. Insbesondere ist die Materialauffangvorrichtung 116a relativ zu dem Antriebsgehäuse 16a schwenkbar an dem Auswurfstutzen 76a angeordnet. Die Materialauffangvorrichtung 116a kann dadurch vorteilhaft flexibel während eines Schleifvorgangs ausgerichtet werden, sodass auch schwer zugängliche Oberflächen bearbeitet werden können.

Die Montageeinheit 124a umfasst ein Adaptergehäuse 128a. Das Adaptergehäuse 128a ist von der Öffnungsebene 122a in Richtung der Kanallängsachse 84a asymmetrisch verjüngend ausgebildet. Das Kanalelement 126a ragt zumindest teilweise in das Adaptergehäuse 128a hinein. Das Kanalelement 126a ist insbesondere rotationssymmetrisch zu der Längsachse 92a ausgebildet. Bevorzugt ist das Kanalelement 126a vollständig in dem Adaptergehäuse 128a eingelassen. Besonders bevorzugt sind das Kanalelement 126a und das Adaptergehäuse 128a einstückig ausgebildet. Das Adaptergehäuse 128a weist vorzugsweise ein Montageelement zu einer Fixierung des Materialauffangbehälters 112a an dem Adaptergehäuse 128a auf. Beispielsweise ist das Montageelement als Gewinde, bevorzugt als Außengewinde, ausgebildet. Insbesondere weist der Materialauffangbehälter 112a einen luftdurchlässigen Behälterbereich 168a zu einem Sammeln des abgetragenen Materials und einen Befestigungsring 164a zu einer Befestigung des Behälterbereichs 168a an der Montageeinheit 124a auf. Vorzugsweise weist der Befestigungsring 164a ein Montageelement, beispielsweise ein Gewinde, insbesondere ein Innengewinde, zu einer Verbindung mit dem Adaptergehäuse 128a auf. Vorzugsweise ist der Behälterbereich 168a mittels einer Rast- und/oder Schraubverbindung 166a an dem Befestigungsring 164a fixiert. Insbesondere begrenzt der Befestigungsring 164a die Öffnung 120a. Der Befestigungsring 164a und das Adaptergehäuse 128a sind vorzugsweise zumindest im Wesentlichen bündig aneinander angeordnet. Das Adaptergehäuse 128a ist insbesondere in Form eines auf dem Befestigungsring 164a schief aufsitzenden Kegelstumpfs ausgebildet, dessen Kegelachse koaxial mit der Kanallängsachse 84a ausgerichtet ist. Vorzugsweise ist ein Radius eines Deckfläche des kegelstumpfförmigen Adaptergehäuses 128a gleich einem Außenradius des Kanalelements 126a.

Eine maximale Adapterlängserstreckung eines in eine Richtung der Behälterlängsachse 114a über den Materialauffangbehälter 112a hinausstehenden Abschnitts der Montageeinheit 124a ist kleiner oder gleich einer maximalen Adapterquererstreckung der Montageeinheit 124a in der Öffnungsebene 122a. Insbesondere liegt ein Verhältnis der Adapterlängserstreckung zu der Adapterquererstreckung zwischen 50 % und 80 %, bevorzugt zwischen 60 % und 70 %. Insbesondere ragt das Adaptergehäuse 128a, insbesondere eine Einlassöffnung 130a des Kanalelements 126a, höchstens geringfügig bei einer Projektion entlang der Behälterlängsachse 114a über den Materialauffangbehälter 112a hinaus. Insbesondere liegt eine Projektion des Adaptergehäuses 128a entlang der Behälterlängsachse 114a vollständig im Inneren eines kleinsten gedachten Quadrats, das eine Projektion des Materialauffangbehälters 112a gerade vollständig einschließt. Insbesondere ist eine maximale Entfernung der Einlassöffnung 130a von der Behälterlängsachse 114a kleiner als $\sqrt{2}$ mal einem Außenradius des Materialauffangbehälters 112a in der Öffnungsebene 122a. In Figur 7 wird der Materialauffangbehälter 112a durch die Schnittebene in einem Verhältnis von mehr als 1:4 geteilt, sodass hier nicht der Durchmesser des Materialauffangbehälters 112a dargestellt ist und das Adaptergehäuse 128a nur scheinbar in Richtung der Schleifvorrichtung 12a deutlich über den Materialauffangbehälter 112a hinausragt.

Die Auslassöffnung des Kanalelements 126a nimmt eine maximale Auslassöffnungsweite zwischen 35 % und 55 %, insbesondere zwischen 44 % und 47 %, einer maximalen Öffnungsweite der Öffnung 120a in der Öffnungsebene 122a ein. Vorzugsweise beträgt ein Verhältnis eines Innendurchmessers des Kanalelements 126a im Verhältnis zu der Öffnungsweite der Öffnung 120a zwischen 35 % und 60 %, vorzugsweise zwischen 45 % und 55 %. Vorzugsweise verläuft die Behälterlängsachse 114a durch eine dem Materialauffangbehälter 112a zugewandte Auslassöffnung des Kanalelements 126a hindurch. Vorzugsweise ist die Auslassöffnung des Kanalelements 126a in einer Ebene angeordnet, die zumindest im Wesentlichen senkrecht zu der Kanallängsachse 84a und quer zur Öffnungsebene 122a verläuft. Ein geometrischer Mittelpunkt der Auslassöffnung des Kanalelements 126a ist zumindest in der weiteren Schnittebene insbesondere gegenüber der Behälterlängsachse 114a versetzt angeordnet, insbesondere um einen Betrag von 10 % bis 30 % der maximalen Öffnungsweite.

Die Einlassöffnung 130a des Kanalelements 126a erstreckt sich in einer Ebene, welche zumindest im Wesentlichen senkrecht zur Kanallängsachse 84a und insbesondere quer zur Öffnungsebene 122a verläuft. Die Einlassöffnung 130a umgreift insbesondere den Bereich des Auswurfstutzens 76a mit dem kreisförmigen Querschnitt. Vorzugsweise ragt der Auswurfstutzen 76a bis zumindest zu der Behälterlängsachse 114a in das Kanalelement 126a hinein. Die Einlassöffnung 130a des Kanalelements 126a ist in der Schnittebene und/oder der weiteren Schnittebene beabstandet von der zur der Öffnungsebene 122a senkrecht verlaufenden Behälterlängsachse 114a des Materialauffangbehälters 112a angeordnet.

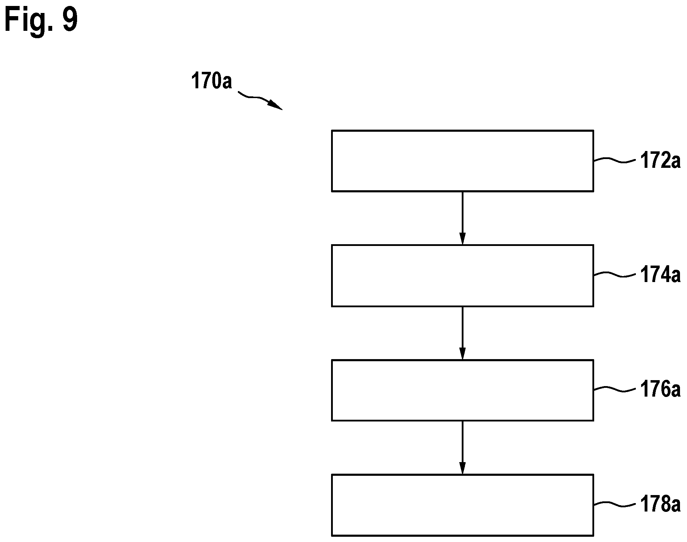

Figur 9 zeigt ein Flussdiagramm eines Verfahren 170a zur Montage der Handwerkzeugmaschine 118a. Das Verfahren 170a umfasst insbesondere einen Vormontageschritt 172a. Vorzugsweise umfasst das Verfahren 170a einen Verbundschritt 174a. Bevorzugt umfasst das Verfahren 170a einen Hauptschalenanordnungsschritt 176a. Insbesondere umfasst das Verfahren 170a einen Fixierungsschritt 178a. In dem Vormontageschritt 172a wird insbesondere die Antriebsvorrichtung 14a und/oder die Schleifvorrichtung 12a, insbesondere unabhängig voneinander, vormontiert. In dem Vormontageschritt 172a wird die Antriebsvorrichtung 14a in dem Antriebsgehäuse 16a, insbesondere in einer Montagehalbschale des Antriebsgehäuses 16a, der Handwerkzeugmaschine 118a angeordnet. In dem Verbundschritt 174a wird das Getriebeelement 58a vorzugsweise auf die Antriebswelle 26a gepresst. In dem Verbundschritt 174a wird die Schleifvorrichtung 12a vorzugsweise an dem Getriebeelement 58a angeschraubt. In dem Hauptschalenanordnungsschritt 176a wird ein zur Drehachse 24a paralleler Formschluss der Verbindungsgehäuseeinheit 20a mit der Andockschnittstelle 22a mittels des in der Fixierebene 27a angeordneten Axialformschlusselements 28a, 29a, 30a, 32a der Andockschnittstelle 22a gebildet. In dem Hauptschalenanordnungsschritt 176a wird die Verbindungsgehäuseeinheit 20a die Andockschnittstelle 22a in der zur Drehachse 24a senkrechten Fixierebene 27a umgreifend an der Andockschnittstelle 22a angeordnet. Insbesondere werden in dem Hauptschalenanordnungsschritt 176a die Hauptschalen 46a, 48a an der Andockschnittstelle 22a angelegt. Insbesondere werden die Gegenflächen der Hauptschalen 46a, 48a an die Anlagefläche 52a angelegt, wobei die Schleifvorrichtung 12a zumindest teilweise in der Verbindungsgehäuseeinheit 20a angeordnet wird. Vorzugsweise wird in dem Hauptschalenanordnungsschritt 176a die Hülse der Hauptschalen 46a, 48a in den Fixierausnehmungen 34a, 36a der Andockschnittstelle 22a eingesteckt. Die Hauptschalen 46a, 48a werden insbesondere in der Montageebene 50a aneinander angelegt. In dem Fixierungsschritt 178a wird das separat ausgebildete Fixierelement 42a, 44a in der in der Fixierausnehmung 34a, 36a angeordneten Hülse angeordnet und presst dadurch die Hauptschalen 46a, 48a aneinander und gegen die Andockschnittstelle 22a, insbesondere die Anlagefläche 52a. Vorzugsweise werden die Fixierelemente 42a, 44a, die Zusatzfixierelemente 150a, 152 und optional Antriebsgehäusefixierelemente zu einer Verbindung der Montagehalbschalen des Antriebsgehäuses 16a alle aus derselben einer zu der Montageebene 50a zumindest im Wesentlichen senkrechten Richtung an den Hauptschalen 46a, 48a, der Andockschnittstelle 22a und/oder dem Antriebsgehäuse 16a montiert.

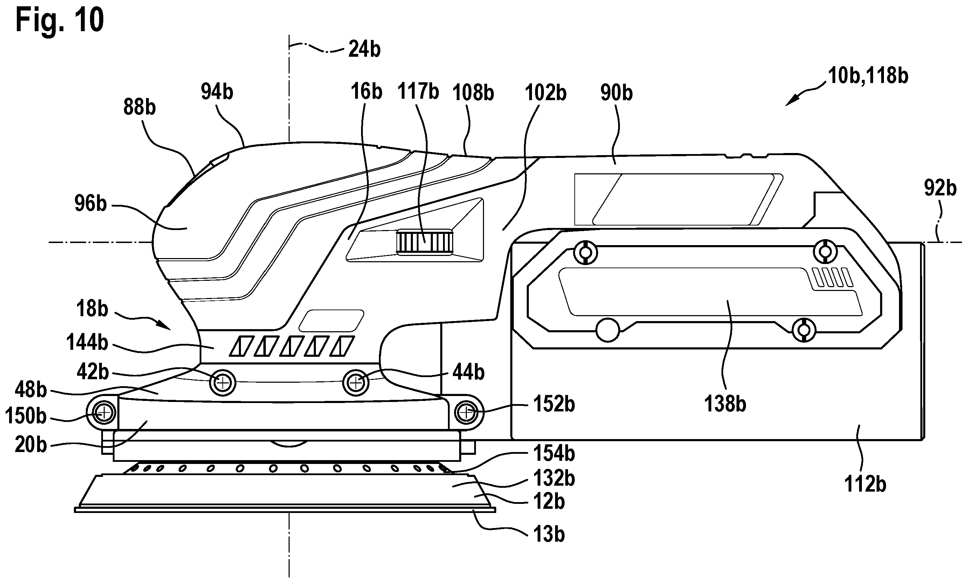

In den Figuren 10 bis 15 sind weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 9, verwiesen werden kann. Zur Unterscheidung der Ausführungsbeispiele ist der Buchstabe a den Bezugzeichen des Ausführungsbeispiels in den Figuren 1 bis 9 nachgestellt. In den Ausführungsbeispielen der Figuren 10 bis 15 ist der Buchstabe a durch die Buchstaben b bis d ersetzt.

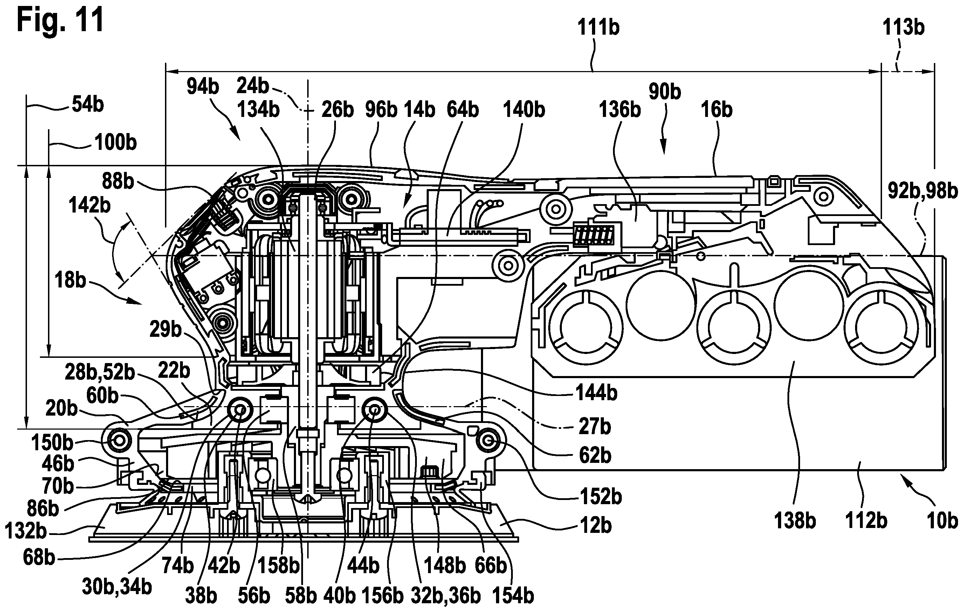

Figur 10 zeigt eine Außenansicht und Figur 11 einen Längsschnitt einer als Exzenterschleifer ausgebildete Handwerkzeugmaschine 118b. Die Handwerkzeugmaschine 118b umfasst eine Schleifvorrichtung 12b, welche insbesondere identisch zu der Schleifvorrichtung 12a des vorherigen Ausführungsbeispiels ist. Die Handwerkzeugmaschine 118b weist eine Antriebsvorrichtung 14b auf. insbesondere mit einem Elektromotor 134b auf. Der Elektromotor 134b umfasst insbesondere eine Nennspannung von 18 Volt. Vorzugsweise ist eine elektrische Versorgungsschnittstelle 136b der Antriebsvorrichtung 14b und ein Längsachsenabschnitt 90b eines Antriebsgehäuses 16b der Handwerkzeugmaschine 118b zu einer Aufnahme eines 18 Volt-Akkupacks 138b ausgelegt. Die Handwerkzeugmaschine 118b umfasst eine Schnittstellenvorrichtung 18b mit einer Andockschnittstelle 22b und einer Verbindungsgehäuseeinheit 20b. Die Verbindungsgehäuseeinheit 20b weist vorzugsweise ein Gegengewicht auf, welches ein durch ein Gewicht des Akkupacks 138b verursachtes Drehmoment kompensiert, insbesondere um ein Verkippen einer Drehachse 24b der Antriebsvorrichtung 14b zu vermeiden. Bevorzugt ist das Gegengewicht an Hauptschalen 46b, 48b der Verbindungsgehäuseeinheit 20b angeordnet, insbesondere in diese integriert. Optional sind die Hauptschalen 46b, 48b zur Bildung des Gegengewichts aus Metall gefertigt, insbesondere mittels eines Aluminium-Zink-Druckgussprozesses. Alternativ weisen die Hauptschalen 46b, 48b als Gegengewicht Metalleinlagerungen in einem Kunststoffkörper auf. Das Gegengewicht und die elektrische Versorgungsschnittstelle 136b sind insbesondere auf verschiedenen Seiten einer zu einer Längsachse 92b der Handwerkzeugmaschine 118b senkrechten und die Drehachse 24b enthaltenen Ebene angeordnet. Vorzugsweise liegt ein Abschnitt der Verbindungsgehäuseeinheit 20b mit dem Gegengewicht an einer Andockschnittstelle 22b der Schnittstellenvorrichtung 18b an. Insbesondere weist der Abschnitt der Verbindungsgehäuseeinheit 20b mit dem Gegengewicht einen größere Wandstärke auf als ein Abschnitt der Verbindungsgehäuseeinheit 20b, welcher auf der zur Längsachse 92b senkrechten und die Drehachse 24b umfassenden Ebene gegenüberliegenden Seite angeordnet ist. Bevorzugt weist der Abschnitt der Verbindungsgehäuseeinheit 20b mit dem Gegengewicht eine dem Antriebsgehäuse 16b zugewandte Außenfläche auf, die gegenüber einer zur Drehachse 24b senkrechten Ebene in Richtung der Schleifvorrichtung 12b um 15° bis 30° geneigt ist. Bezüglich weiterer Merkmale der Handwerkzeugmaschine 118b sei auf die Figuren 1 bis 9 und deren Beschreibung verwiesen.

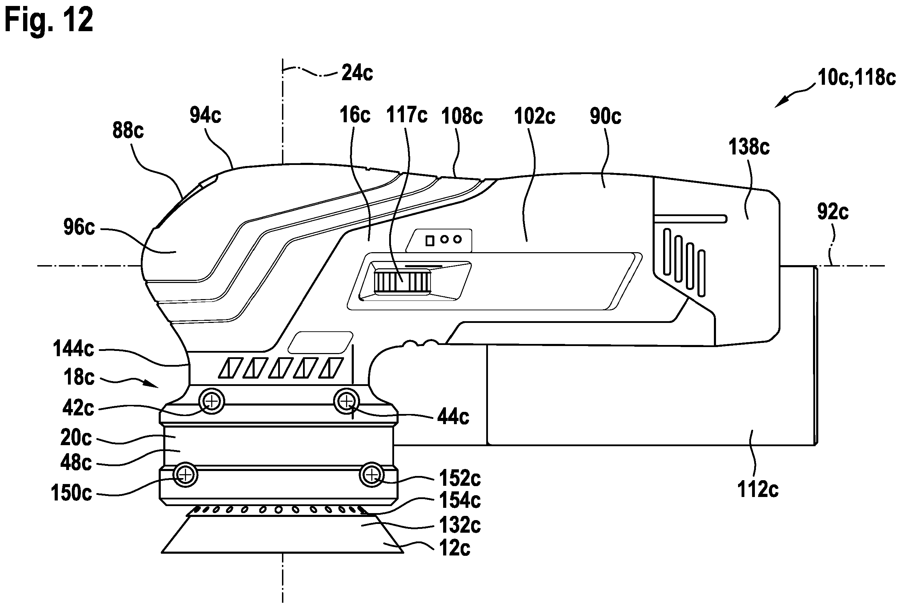

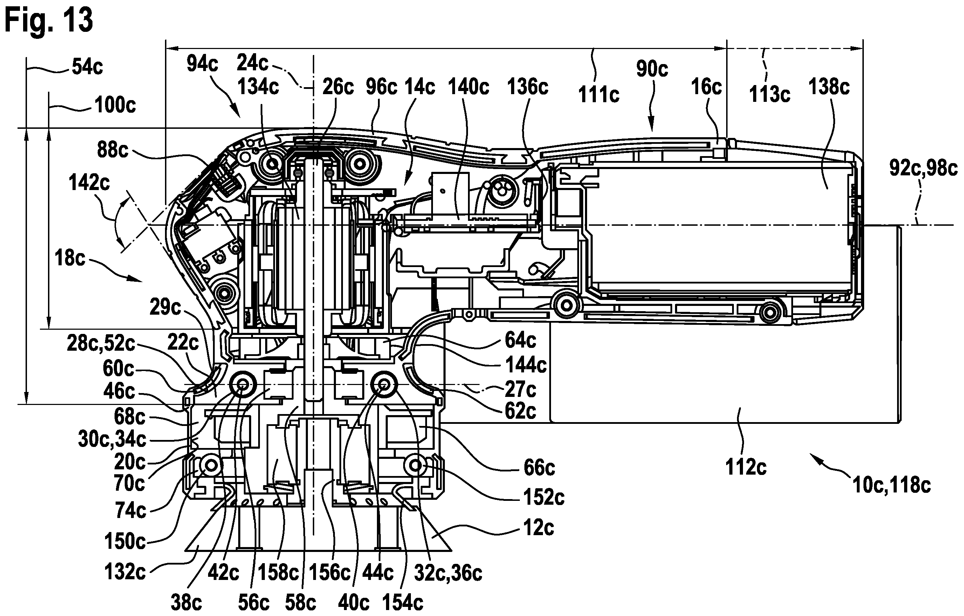

Figur 12 zeigt eine Außenansicht und Figur 13 einen Längsschnitt einer Handwerkzeugmaschine 118c. Die Handwerkzeugmaschine 118c weist eine Antriebsvorrichtung 14c und eine Antriebsgehäuse 16c auf, welche insbesondere identisch zu der Antriebsvorrichtung 14a bzw. dem Antriebsgehäuse 16a des ersten Ausführungsbeispiels ausgebildet sind. Alternativ kann eine Schleifvorrichtung 12c der Handwerkzeugmaschine 118c, insbesondere ohne weitere Anpassung, auch mit einer Antriebvorrichtung und einem Antriebsgehäuse 16c kombiniert werden, wie sie im zweiten Ausführungsbeispiel gezeigt werden. Ein Schleifpad 132c der Schleifvorrichtung 12c weist beispielsweise einen Durchmesser zwischen 70 mm und 80 mm, bevorzugt zwischen 77 und 78 mm, auf. Insbesondere liegen die gesamte Schleifvorrichtung 12c und eine Schnittstellenvorrichtung 18c der Handwerkzeugmaschine 118c bei einer Projektion entlang einer Drehachse 24c der Antriebsvorrichtung 14c im inneren des Antriebsgehäuses 16c. Eine Andockschnittstelle 22c der Schnittstellenvorrichtung 18c ist insbesondere identisch zu den Andockschnittstellen 22a, 22b der vorherigen Ausführungsbeispiele ausgebildet. Eine Verbindungsgehäuseeinheit 20c der Schnittstellenvorrichtung 18c ist insbesondere an eine Höhe der Schleifvorrichtung 12c parallel zu der Drehachse 24c angepasst. Vorzugsweise ist eine maximale Quererstreckung der Verbindungsgehäuseeinheit 20c senkrecht zur Drehachse 24c unwesentlich, insbesondere nur um eine, insbesondere eine doppelte, Wandstärke der Verbindungsgehäuseeinheit 20c, größer als eine maximale Quererstreckung der Andockschnittstelle 22c. Insbesondere ist ein zumindest im Wesentlichen parallel zur Drehachse 24c verlaufender Abschnitt der Verbindungsgehäuseeinheit 20c unmittelbar an der Andockschnittstelle angeordnet. Insbesondere sind Zusatzfixierelemente 150c, 152c in einer Ebene parallel zur Drehachse 24c mit einer Anlagefläche 52c der Andockschnittstelle 22c angeordnet. Ein Getriebeelement 58c der Schnittstellenvorrichtung 18c greift durch einen optionalen Lüfter 66c entlang der Drehachse hindurch. Insbesondere ist das Getriebeelement 58c einteilig mit einem Exzenter der Schleifvorrichtung 12c zu einem Antrieb des Schleifpads 132c ausgebildet. Das Getriebeelement 58c umgreift ein Exzenterlager 158c der Schleifvorrichtung 12c insbesondere in einer zur Drehachse 24c senkrechten Ebene. Das Exzenterlager 158c umgreift vorzugsweise einen Schleifpadhalter 156c der Schleifvorrichtung 12c in einer zu der Drehachse 24c senkrechen Ebene. Der Schleifpadhalter 156c nimmt insbesondere einen Fortsatz des Schleifpads 132c in einer Richtung parallel zur Drehachse 24c auf. Bezüglich weiterer Merkmale der Handwerkzeugmaschine 118c sei auf die Figuren 1 bis 11 und deren Beschreibung verwiesen.

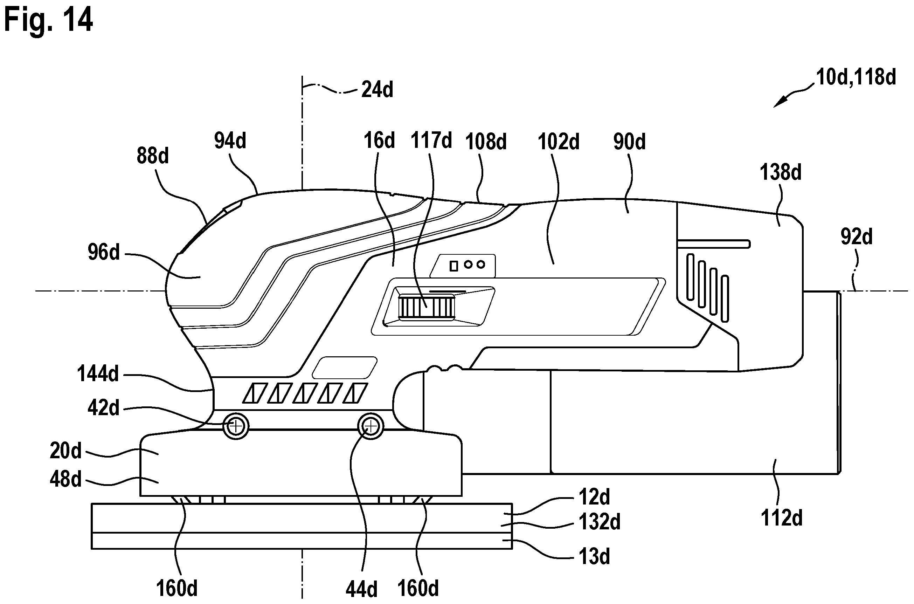

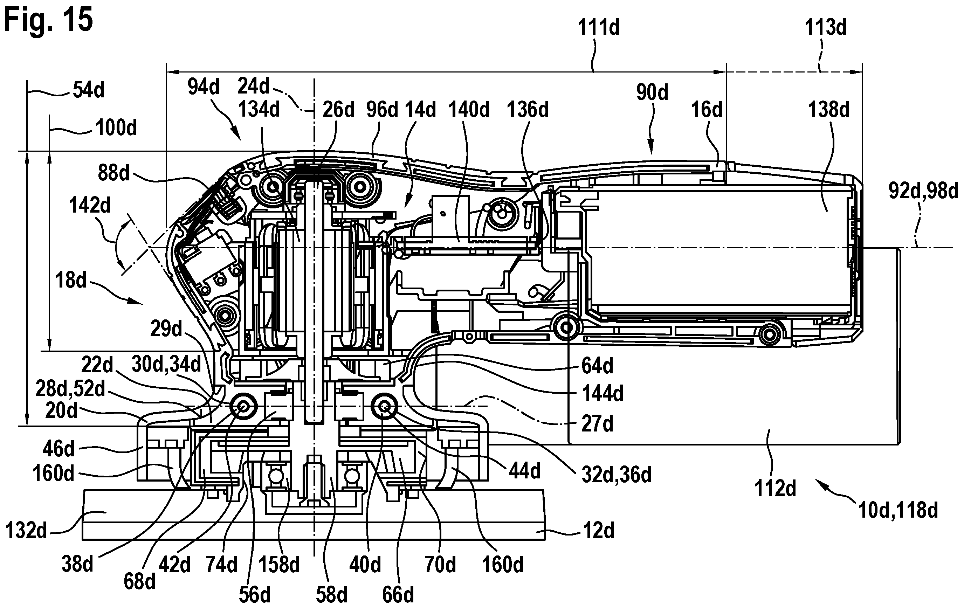

Figur 14 zeigt eine Außenansicht und Figur 15 einen Längsschnitt einer Handwerkzeugmaschine 118d. Die Handwerkzeugmaschine 118d ist insbesondere als Schwingschleifer ausgebildet. Die Handwerkzeugmaschine 118d weist eine Antriebsvorrichtung 14d und eine Antriebsgehäuse 16d auf, welche insbesondere identisch zu der Antriebsvorrichtung 14a bzw. dem Antriebsgehäuse 16a des ersten Ausführungsbeispiels ausgebildet sind. Alternativ kann eine Schleifvorrichtung 12d der Handwerkzeugmaschine 118d, insbesondere ohne weitere Anpassung, auch mit einer Antriebvorrichtung und einem Antriebsgehäuse kombiniert werden, wie sie im zweiten Ausführungsbeispiel gezeigt werden. Ein Schleifpad 132d der Schleifvorrichtung 12d ist insbesondere mittels einer elastischen Halterung 160d an einer Verbindungsgehäuseeinheit 20d einer Schnittstellenvorrichtung 18d der Handwerkzeugmaschine 118d befestigt. Ein Lüfter 66d der Schleifvorrichtung 12d ist in einem Lüftergehäuse der Schleifvorrichtung 12d angeordnet, welches insbesondere innerhalb der Verbindungsgehäuseeinheit 20d angeordnet ist. Die elastische Halterung 160d ist insbesondere zwischen dem Lüftergehäuse und der Verbindungsgehäuseeinheit 20d angeordnet. Ein Getriebeelement 58d der Schnittstellenvorrichtung 18d ist vorzugsweise einteilig mit einem Exzenter der Schleifvorrichtung 12d ausgebildet. Ein Exzenterlager 158d der Schleifvorrichtung 12d umgreift insbesondere das Getriebeelement 58d in einer zu einer Drehachse 24d der Antriebsvorrichtung 14d senkrechten Ebene. Das Exzenterlager 158d ist insbesondere in einem durch das Exzenterlager 158d auslenkbaren Führungsring des Schleifpads 132d angeordnet und mit dem Führungsring vorzugsweise kraftschlüssig verbunden. Bezüglich weiterer Merkmale der Handwerkzeugmaschine 118d sei auf die Figuren 1 bis 13 und deren Beschreibung verwiesen.

**Patentansprüche**

1. Materialauffangvorrichtung für eine Handwerkzeugmaschine, insbesondere für eine Schleifmaschine, mit einem Materialauffangbehälter (112a) zu einem Auffangen bei einem Betrieb der Handwerkzeugmaschine abgetragenen Materials, wobei zumindest eine Öffnung (120a) des Materialauffangbehälters (112a) zu einer Einspeisung des Materials in den Materialauffangbehälter (112a) in einer Öffnungsebene (122a) angeordnet ist, wobei der Materialauffangbehälter (112a) eine Behälterlängsachse (114a) umfasst, welche senkrecht zu der Öffnungsebene (122a) verläuft wobei die Materialauffangvorrichtung zumindest eine Montageeinheit (124a) zu einer Montage des Materialauffangbehälters (112a) an der Handwerkzeugmaschine umfasst, wobei die Montageeinheit (124a) ein Kanalelement (126a) zur Verbindung mit einem Auswurfstutzen (76a; 76b; 76c; 76d) der Handwerkzeugmaschine umfasst, **dadurch gekennzeichnet, dass** eine Kanallängsachse (84a) des Kanalelements (126a) und die Behälterlängsachse (114a) des Materialauffangbehälters (112a) windschief zueinander angeordnet sind.

2. Materialauffangvorrichtung nach Anspruch 1, **da-**

**durch gekennzeichnet, dass** die Montageeinheit (124a) ein Adaptergehäuse (128a) umfasst, welches von der Öffnungsebene (122a) in Richtung der Kanallängsachse (84a) asymmetrisch verjüngend ausgebildet ist und in welches das Kanalelement (126a) zumindest teilweise hineinragt.

3. Materialauffangvorrichtung nach einem der vorhergehenden Ansprüche, **dadurch gekennzeichnet, dass** eine Einlassöffnung (130a) des Kanalelements (126a) sich in einer Ebene erstreckt, welche zumindest im Wesentlichen senkrecht zur Kanallängsachse (84a) und insbesondere quer zur Öffnungsebene (122a) verläuft.

4. Materialauffangvorrichtung nach einem der vorhergehenden Ansprüche, **dadurch gekennzeichnet, dass** eine Einlassöffnung (130a) des Kanalelements (126a) beabstandet von der zur Öffnungsebene (122a) senkrecht verlaufenden Behälterlängsachse (114a) des Materialauffangbehälters (112a) angeordnet ist.

5. Materialauffangvorrichtung nach einem der vorhergehenden Ansprüche, **dadurch gekennzeichnet, dass** eine maximale Adapterlängserstreckung eines über den Materialauffangbehälter (112a) hinausstehenden Abschnitts der Montageeinheit (124a) kleiner oder gleich einer maximale Adapterquererstreckung der Montageeinheit (124a) in der Öffnungsebene (122a) ist.

6. Materialauffangvorrichtung nach einem der vorhergehenden Ansprüche, **dadurch gekennzeichnet, dass** eine Auslassöffnung des Kanalelements (126a) eine maximale Auslassöffnungsweite zwischen 35% und 55% einer maximalen Öffnungsweite der Öffnung (120a) in der Öffnungsebene (122a) einnimmt.

7. Handwerkzeugmaschine, insbesondere Schleifmaschine, mit einer Materialauffangvorrichtung nach einem der vorhergehenden Ansprüche.

8. Handwerkzeugmaschine nach Anspruch 7, **dadurch gekennzeichnet, dass** die zur Öffnungsebene (122a) senkrechte Behälterlängsachse (114a) des Materialauffangbehälters (112a; 112b; 112c; 112d) relativ zu einer, durch eine senkrecht zu einer Drehachse (24a; 24b; 24c; 24d) einer Antriebswelle (26a; 26b; 26c; 26d) der Handwerkzeugmaschine verlaufenden Längsachse (92a; 92b; 92c; 92d) und die Drehachse (24a; 24b; 24c; 24d) aufgespannten Montageebene (50a), einen Winkel einschließt, der addiert mit einem Winkel zwischen Kanallängsachse (84a) und Behälterlängsachse (114a) einen Summenwinkel zwischen 80° und 100° bildet.

9. Handwerkzeugmaschine nach Anspruch 7 oder 8, **dadurch gekennzeichnet, dass** eine zur Öffnungsebene (122a) senkrechte Behälterlängsachse (114a) im an der Handwerkzeugmaschine montierten Zustand der Materialauffangvorrichtung, zumindest im Wesentlichen parallel zu einer durch eine senkrecht zu einer Drehachse (24a; 24b; 24c; 24d) einer Antriebswelle (26a; 26b; 26c; 26d) der Handwerkzeugmaschine verlaufenden Längsachse (92a; 92b; 92c; 92d) eines Antriebsgehäuses (16a; 16b; 16c; 16d) der Handwerkzeugmaschine und die Drehachse (24a; 24b; 24c; 24d) aufgespannten Montageebene (50a) anordenbar ist, insbesondere wobei die Behälterlängsachse (114a) parallel zur Längsachse (92a; 92b; 92c; 92d) ausgerichtet ist.

10. Handwerkzeugmaschine nach einem der Ansprüche 7 bis 9, **gekennzeichnet, durch** ein Antriebsgehäuse (16a; 16b; 16c; 16d), welches einen Abstand von dem Materialauffangbehälter (112a; 112b; 112c; 112d) aufweist, der zwischen 10 mm und 40 mm liegt.

## Claims

1. Material collection device for a hand-held machine tool, in particular for a sander, with a material collection container (112a) for collecting material removed during operation of the hand-held machine tool, wherein at least one opening (120a) of the material collection container (112a) for feeding the material into the material collection container (112a) is disposed in an opening plane (122a), wherein the material collection container (112a) comprises a container longitudinal axis (114a) which extends perpendicularly to the opening plane (122a), wherein the material collection device comprises at least one assembly unit (124a) for assembling the material collection container (112a) on the hand-held machine tool, wherein the assembly unit (124a) comprises a duct element (126a) for connecting to a discharge port (76a; 76b; 76c; 76d) of the hand-held machine tool, **characterized in that** a duct longitudinal axis (84a) of the duct element (126a) and the container longitudinal axis (114a) of the material collection container (112a) are disposed so as to be skewed relative to one another.

2. Material collection device according to Claim 1, **characterized in that** the assembly unit (124a) comprises an adapter housing (128a) which is formed so as to taper asymmetrically from the opening plane (122a) in the direction of the duct longitudinal axis (84a) and into which the duct element (126a) at least partially protrudes.

3. Material collection device according to one of the preceding claims, **characterized in that** an inlet opening (130a) of the duct element (126a) extends in a plane which runs at least substantially perpendicularly to the duct longitudinal axis (84a) and in particular transversely to the opening plane (122a).

4. Material collection device according to one of the preceding claims, **characterized in that** an inlet opening (130a) of the duct element (126a) is disposed so as to be spaced apart from the container longitudinal axis (114a) of the material collection container (112a) that runs perpendicularly to the opening plane (122a).

5. Material collection device according to one of the preceding claims, **characterized in that** a maximum adapter longitudinal extent of a portion of the assembly unit (124a) extending beyond the material collection container (112a) is less than or equal to a maximum adapter transverse extent of the assembly unit (124a) in the opening plane (122a).

6. Material collection device according to one of the preceding claims, **characterized in that** an outlet opening of the duct element (126a) occupies a maximum outlet opening width between 35% and 55% of a maximum opening width of the opening (120a) in the opening plane (122a).

7. Hand-held machine tool, in particular sander, with a material collection device according to one of the preceding claims.

8. Hand-held machine tool according to Claim 7, **characterized in that** the container longitudinal axis (114a) of the material collection container (112a; 112b; 112c: 112d) that is perpendicular to the opening plane (122a), relative to an assembly plane (50a), the latter defined by a longitudinal axis (92a; 92b; 92c; 92d) running perpendicularly to a rotation axis (24a; 24b; 24c; 24d) of a drive shaft (26a; 26b; 26c; 26d) of the hand-held machine tool and by the rotation axis (24a; 24b; 24c; 24d), includes an angle which when added to an angle between the duct longitudinal axis (84a) and the container longitudinal axis (114a) forms a total angle between 80° and 100°.

9. Hand-held machine tool according to Claim 7 or 8, **characterized in that** a container longitudinal axis (114a) which is perpendicular to the opening plane (122a), in the assembled state of the material collection device on the hand-held machine tool, is able to be disposed so as to be at least substantially parallel to an assembly plane (50a), the latter defined by a longitudinal axis (92a; 92b; 92c; 92d) of a drive housing (16a; 16b; 16c; 16d) of the hand-held machine tool that runs perpendicularly to a rotation axis (24a; 24b; 24c; 24d) of a drive shaft (26a; 26b; 26c; 26d) of the hand-held machine tool and by the rotation axis (24a; 24b; 24c; 24d), in particular wherein the container longitudinal axis (114a) is aligned so as to be parallel to the longitudinal axis (92a; 92b; 92c; 92d).

10. Hand-held machine tool according to one of Claims 7 to 9, **characterized by** a drive housing (16a; 16b; 16c; 16d) which has a spacing from the material collection container (112a; 112b; 112c; 112d), the spacing being between 10 mm and 40 mm.

**Revendications**

1. Dispositif de collecte de matériau pour une machine-outil portative, en particulier pour une rectifieuse, avec un récipient de collecte de matériau (112a) destiné à collecter du matériau prélevé lors d'un fonctionnement de la machine-outil portative, au moins une ouverture (120a) du récipient de collecte de matériau (112a) destinée à injecter le matériau dans le récipient de collecte de matériau (112a) étant disposée dans un plan d'ouverture (122a), le récipient de collecte de matériau (112a) comprenant un axe longitudinal (114a) de récipient, qui s'étend perpendiculairement au plan d'ouverture (122a), le dispositif de collecte de matériau comprenant au moins une unité de montage (124a) pour le montage du récipient de collecte de matériau (112a) sur la machine-outil portative, l'unité de montage (124a) comprenant un élément de canal (126a) pour le raccordement à une tubulure d'éjection (76a ; 76b ; 76c ; 76d) de la machine-outil portative, **caractérisé en ce qu'**un axe longitudinal (84a) de canal de l'élément de canal (126a) et l'axe longitudinal (114a) de récipient du récipient de collecte de matériau (112a) sont disposés de manière inclinée l'un par rapport à l'autre.

2. Dispositif de collecte de matériau selon la revendication 1, **caractérisé en ce que** l'unité de montage (124a) comprend un boîtier adaptateur (128a), qui est formé de manière à se rétrécir asymétriquement à partir du plan d'ouverture (122a) en direction de l'axe longitudinal (84a) de canal et dans lequel dépasse au moins en partie l'élément de canal (126a).

3. Dispositif de collecte de matériau selon l'une des revendications précédentes, **caractérisé en ce qu'**une ouverture d'entrée (130a) de l'élément de canal (126a) s'étend dans un plan qui s'étend au moins sensiblement perpendiculairement à l'axe longitudinal (84a) de canal et en particulier transversalement au plan d'ouverture (122a).

4. Dispositif de collecte de matériau selon l'une des revendications précédentes, **caractérisé en ce qu'**une ouverture d'entrée (130a) de l'élément de canal (126a) est disposée à distance de l'axe longitudinal (114a) du récipient de collecte de matériau (112a), qui s'étend perpendiculairement au plan d'ouverture (122a).

5. Dispositif de collecte de matériau selon l'une des revendications précédentes, **caractérisé en ce qu'**une extension longitudinale maximale d'adaptateur d'une section de l'unité de montage (124a) faisant saillie du récipient de collecte de matériau (112a) est inférieure ou égale à une extension transversale maximale d'adaptateur de l'unité de montage (124a) dans le plan d'ouverture (122a).

6. Dispositif de collecte de matériau selon l'une des revendications précédentes, **caractérisé en ce qu'**une ouverture de sortie de l'élément de canal (126a) présente une largeur d'ouverture de sortie maximale comprise entre 35 % et 55 % d'une largeur d'ouverture maximale de l'ouverture (120a) dans le plan d'ouverture (122a).

7. Machine-outil portative, en particulier rectifieuse, avec un dispositif de collecte de matériau selon l'une des revendications précédentes.

8. Machine-outil portative selon la revendication 7, **caractérisée en ce que** l'axe longitudinal (114a) perpendiculaire au plan d'ouverture (122a) du récipient de collecte de matériau (112a ; 112b ; 112c ; 112d) forme par rapport à un plan de montage (50a) formé par un axe longitudinal (92a ; 92b ; 92c ; 92d) s'étendant perpendiculairement à un axe de rotation (24a ; 24b ; 24c ; 24d) d'un arbre d'entraînement (26a ; 26b ; 26c ; 26d) de la machine-outil portative et l'axe de rotation (24a ; 24b ; 24c ; 24d) un angle qui, ajouté à un angle entre l'axe longitudinal (84a) de canal et l'axe longitudinal (114a) de récipient, forme un angle total compris entre 80° et 100°.

9. Machine-outil portative selon la revendication 7 ou 8, **caractérisée en ce qu'**un axe longitudinal (114a) de récipient perpendiculaire au plan d'ouverture (122a) peut être disposé au moins sensiblement parallèlement à un plan de montage (50a) formé par axe longitudinal (92a ; 92b ; 92c ; 92d), s'étendant perpendiculairement à un axe de rotation (24a ; 24b ; 24c ; 24d) d'un arbre d'entraînement (26a ; 26b ; 26c ; 26d) de la machine-outil portative, d'un boîtier d'entraînement (16a ; 16b ; 16c ; 16d) de la machine-outil portative et l'axe de rotation (24a ; 24b ; 24c ; 24d), l'axe longitudinal (114a) de récipient étant en particulier orienté parallèlement à l'axe longitudinal (92a ; 92b ; 92c ; 92d).

10. Machine-outil portative selon l'une des revendications 7 à 9, **caractérisée par** un boîtier d'entraînement (16a ; 16b ; 16c ; 16d), qui présente une distance par rapport au récipient de collecte de matériau (112a ; 112b ; 112c ; 112d), qui est comprise entre 10 mm et 40 mm.

Fig. 1

EP 4 232 238 B1

Fig. 2

Fig. 3

EP 4 232 238 B1

Fig. 4

EP 4 232 238 B1

Fig. 5

Fig. 6

EP 4 232 238 B1

Fig. 7

Fig. 8

EP 4 232 238 B1

EP 4 232 238 B1

**Fig. 9**

170a

Fig. 10

Fig. 11

Fig. 12

10c,118c
92c
138c
112c
90c
102c
108c
117c
16c
24c
94c
88c
96c
144c
18c
42c
20c
48c
150c
44c
152c
154c
132c
12c

Fig. 13

## Fig. 14

EP 4 232 238 B1

# Fig. 15

EP 4 232 238 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0842736 A2